# EUROPEAN PATENT APPLICATION

(11) **EP 3 441 933 A1**
(43) Date of publication of application: **13.02.2019**
(21) Application number: 17778889.0
(22) Date of filing: 24.02.2017
(51) Int. Cl.: G06Q 50/10, G06Q 10/02, G06Q 30/06

(54) **VEHICLE MANAGEMENT DEVICE, TERMINAL DEVICE, VEHICLE MANAGEMENT METHOD AND PROGRAM**

(30) Priority: 08.04.2016 JP 2016078073
(71) Applicant: Sony Corporation, Tokyo 108-0075 (JP)
(72) Inventor: NODA, Atsushi, Tokyo 108-0075 (JP); KANEMOTO, Katsuyoshi, Tokyo 108-0075 (JP)
(74) Representative: Witte, Weller & Partner Patentanwälte mbB
(86) International application number: PCT/JP2017/007061
(87) International publication number: WO 2017/175510

(57) **Abstract**

Communication is performed among a vehicle management device 50, a terminal device used by a user of a vehicle 20, and a terminal device 60 possessed by a use scheduled person who is scheduled to use the vehicle 20. On the basis of information obtained from the vehicle 20, for example, position information of the vehicle 20, the vehicle management device 50 estimates the estimated time of arrival at a delivery position at which the vehicle is delivered from the user to the use scheduled person. In a case where it is determined that the estimated time of arrival does not fall within a preset predetermined time range that is set with reference to delivery time of the vehicle and includes the delivery time, the vehicle management device 50 transmits a delivery situation to the use scheduled person. The use scheduled person is enabled to grasp a use situation of the vehicle used by the user, and consequently the vehicle can be smoothly delivered from the user to the use scheduled person.

## Description

### TECHNICAL FIELD

The present technology relates to a vehicle management device, a terminal device, a vehicle management method, and a program, and enables a user to smoothly deliver a vehicle to a use scheduled person.

### BACKGROUND ART

In recent years, for the purpose of effective utilization of vehicles, a reduction in maintenance expenses, and the like, a system in which vehicles are shared among a plurality of users is put to practical use. In this system, a user who is using a shared vehicle ends the use by returning the shared vehicle to a preset delivery position. In addition, the next user rents the returned shared vehicle at the preset delivery position. Moreover, patent document 1 proposes that a limit of a position at which the use of a vehicle is started, and a limit of a position at which the use of the vehicle ends, are relaxed.

### CITATION LIST

### PATENT DOCUMENT

Patent Document 1: Japanese Patent Application Laid-Open No. 2014-071873

### SUMMARY OF THE INVENTION

### PROBLEMS TO BE SOLVED BY THE INVENTION

Incidentally, in a case where traffic congestion or the like occurs due to an accident, construction or the like, or for example, a situation occurs in which a road along which a vehicle is scheduled to travel is blocked, and consequently a detour is forced, even if a delivery position of the vehicle and the delivery time of the vehicle are set beforehand, it is not possible to deliver the vehicle to the delivery position at the delivery time. Therefore, there is a possibility that a trouble will occur in delivering the vehicle between a user and a use scheduled person.

Accordingly, an object of the present technology is to provide a vehicle management device, a terminal device, a vehicle management method, and a program, which enable smooth delivery of vehicles.

### SOLUTIONS TO PROBLEMS

According to a first aspect of the present technology, there is provided a vehicle management device including:
a communication unit that communicates with a terminal device used by a user of a vehicle, and a terminal device possessed by a use scheduled person of the vehicle; and
a vehicle management unit that, in a case where estimated time of arrival at a delivery position at which the vehicle is delivered from the user to the use scheduled person, the estimated time of arrival having been estimated on the basis of position information of the vehicle, does not fall within a preset predetermined time range that is set with reference to delivery time of the vehicle and includes the delivery time, transmits a delivery situation to the terminal device of the use scheduled person.

According to the present technology, the communication unit communicates with the terminal device used by the user of the vehicle and the terminal device possessed by the use scheduled person of the vehicle. In addition, in a case where estimated time of arrival at a delivery position at which the vehicle is delivered from the user to the use scheduled person, the estimated time of arrival having been estimated on the basis of position information of the vehicle, does not fall within a preset predetermined time range that is set with reference to delivery time of the vehicle and includes the delivery time, for example, in a case where the estimated time of arrival is later than the predetermined time range, a delivery situation including information related to a substitutable vehicle is transmitted to the use scheduled person. In a case where a response to the delivery situation from the use scheduled person indicates that it is not possible to use the substitutable vehicle, a request for delivery conditions agreed between the user and the use scheduled person, and information related to a delay in the time of arrival, including information related to compensation to the use scheduled person for the delay in arrival, is transmitted to the terminal device of the user. Further, when delivery conditions are transmitted, information used to perform negotiation for delivery conditions between the terminal device used by the user and the terminal device possessed by the use scheduled person is included in the delivery conditions so as to allow negotiation for the delivery conditions between the terminal device possessed by the use scheduled person and the terminal device possessed by the use scheduled person. Moreover, the vehicle management unit stores the delivery conditions responded to the request for the delivery conditions. In addition, in a case where the response from the use scheduled person indicates that it is possible to use the substitutable vehicle, the vehicle management unit transmits information related to the substitutable vehicle to the use scheduled person. Moreover, in a case where the estimated time of arrival is later than the set predetermined time range, the vehicle management unit includes, in the delivery situation, information related to shops located in proximity to the delivery position, and then transmits the delivery situation. In a case where the estimated time of arrival is earlier than the predetermined time range, the vehicle management unit transmits, to the terminal device used by the user, a delivery situation including information related to additional expenses incurred by early arrival. Furthermore, in a case where the estimated time of arrival is earlier than the predetermined time range, the vehicle management unit includes, in delivery information, information that can be used to cause the estimated time of arrival to fall within the predetermined time range.

According to a second aspect of the present technology, there is provided a terminal device including:
a position information obtaining unit that obtains position information;
a communication unit that communicates with a vehicle management device for managing data related to a predetermined vehicle; and
a control unit that controls the position information obtaining unit and the communication unit,
in which in response to transmitting, to the vehicle management device, position information obtained by the position information obtaining unit, or estimated time of arrival at a delivery place in which the vehicle is delivered from the user to the use scheduled person, the estimated time of arrival having been estimated on the basis of the position information, the control unit performs negotiation with the use scheduled person for delivery conditions of the vehicle.

According to the present technology, on the basis of having transmitted information obtained by the position information obtaining unit from the communication unit to the vehicle management device, the control unit transmits delivery conditions with the terminal device possessed by the use scheduled person of the vehicle, which have been received from the vehicle management device, to the terminal device of the use scheduled person of the vehicle. In addition, the control unit transmits delivery conditions input by the current user to the terminal device of the use scheduled person. Information related to compensation for the delay in arrival of the vehicle, the compensation having been accepted by the current user, is included in the delivery conditions. Further, information related to the compensation money for the delay in arrival, the payment for the compensation having been accepted by the current user, is included in the delivery conditions. In addition, information related to the change of the delivery position, and the delivery time, at which the use scheduled person rides the vehicle, is included in the delivery conditions.

Moreover, the control unit transmits delivery conditions indicating the delivery position and the delivery time to the terminal device of the use scheduled person, and in a case where data informing of not accepting is received from the terminal device of the use scheduled person, the control unit performs control so as to display a screen that allows input of new delivery conditions. Furthermore, in a case where data related to new delivery conditions has been received from the terminal device possessed by the use scheduled person, the control unit performs control so as to display the new delivery conditions, generates a response based on the operation of the user, and transmits the response to the terminal device possessed by the use scheduled person.

According to a third aspect of the present technology, there is provided a vehicle management method including:
communicating with a terminal device used by a user of a vehicle, and a terminal device possessed by a use scheduled person of the vehicle, by using a communication unit; and
in a case where estimated time of arrival at a delivery place in which the vehicle is delivered from the user to the use scheduled person, the estimated time of arrival having been estimated on the basis of position information of the vehicle, does not fall within a predetermined time range that is set with reference to delivery time of the vehicle and includes the delivery time, transmitting a delivery situation to the terminal device of the user or the use scheduled person by a vehicle management unit.

According to a fourth aspect of the present technology, there is provided a program that causes a computer to execute management of a vehicle, the program causing the computer to realize:
a determination function of determining whether or not estimated time of arrival at a delivery place in which the vehicle is delivered from the user to the use scheduled person of the vehicle, the estimated time of arrival having been estimated on the basis of information obtained by a terminal device used by the user of the vehicle through a communication unit, falls within a predetermined time range that is set with reference to delivery time of the vehicle and includes the delivery time; and
a notification function of, in a case where it is determined, by the determination function, that the estimated time of arrival does not fall within the predetermined time range, notifying a terminal device used by the user, or a terminal device possessed by the use scheduled person, of a delivery situation.

Note that a program according to the present technology is a program that can be provided to, for example, a general purpose computer, which is capable of executing various program codes, in a computer readable format by a storage medium, a communication medium, for example, a storage medium such as an optical disk, a magnetic disk, and a semiconductor memory, or a communication medium such as a network. By providing such a program in a computer readable format, processing corresponding to the program can be realized on the computer.

### EFFECTS OF THE INVENTION

According to the present technology, the vehicle management device uses a communication unit to perform communication between a terminal device used by a user of a vehicle and a terminal device possessed by a use scheduled person who is scheduled to use the vehicle. In addition, in a case where estimated time of arrival at a delivery position at which the vehicle is delivered from the user to the use scheduled person, the estimated time of arrival having been estimated on the basis of position information of the vehicle, does not fall within a preset predetermined time range that is set with reference to delivery time of the vehicle and includes the delivery time, the vehicle management device transmits a delivery situation to the terminal device of the use scheduled person. Therefore, the use scheduled person is enabled to grasp a use situation of the vehicle used by the user, and consequently the vehicle can be smoothly delivered from the user to the use scheduled person. It should be noted that the effects described in the present description are to be construed as merely illustrative, and are not limitative, and that, in addition, an additional effect may be produced.

### BRIEF DESCRIPTION OF DRAWINGS

Fig. 1 is a drawing illustrating a configuration of a vehicle management system.
Fig. 2 is a diagram illustrating a configuration of a vehicle.
Fig. 3 is a diagram illustrating a configuration of a vehicle management device.
Fig. 4 is a flowchart illustrating the operation of the vehicle management system.
Fig. 5 is a flowchart partially illustrating the operation of the vehicle management device performed in a case where the estimated time of arrival is delayed than a delivery time range.
Fig. 6 is a sequence diagram illustrating the operation of the vehicle, the operation of the vehicle management device, and the operation of the information terminal.
Fig. 7 is a flowchart illustrating response processing for a request notification for agreed delivery conditions.
Fig. 8 is a drawing illustrating a user interface screen of response processing for a request notification for agreed delivery conditions.
Fig. 9 is a drawing illustrating another user interface screen displayed when a request notification for agreed delivery conditions has been received.
Fig. 10 illustrates a user interface screen displayed in a case where an alternative-plan response result indicates non-acceptance.
Fig. 11 is a flowchart partially illustrating the operation of the vehicle management device performed in a case where the estimated time of arrival is earlier than a delivery time range.
Fig. 12 is a sequence diagram illustrating the operation of the vehicle, and the operation of the vehicle management device.
Fig. 13 is a drawing illustrating a user interface screen displayed in a case where the estimated time of arrival is earlier than a delivery time range.
Fig. 14 is a flowchart illustrating response processing for a request notification for agreed delivery conditions.
Fig. 15 is a drawing illustrating a user interface screen of response processing for a request for agreed delivery conditions.
Fig. 16 is a flowchart illustrating the operation performed in a case where a user desires to change delivery conditions.
Fig. 17 is a drawing illustrating a user interface screen displayed in a case where obtained information is presented in a vehicle or an information terminal.
Fig. 18 is a drawing illustrating another user interface screen displayed in a case where obtained information is presented in a vehicle or an information terminal.

### MODE FOR CARRYING OUT THE INVENTION

Modes for carrying out the present technology will be described below. It should be noted that explanations are made in the following order.
1. Configuration of vehicle management system
2. Configuration of vehicle
3. Configuration of vehicle management device
4. Configuration of terminal device
5. Operation of vehicle management system
5-1. Operation performed in a case where the estimated time of arrival is delayed than a delivery time range
5-2. Operation performed in a case where the estimated time of arrival becomes earlier than a delivery time range
5-3. Operation of negotiation for changing a delivery position
5-4. Another operation of negotiation for changing delivery conditions
6. Another operation of vehicle management system

### <1. Configuration of vehicle management system>

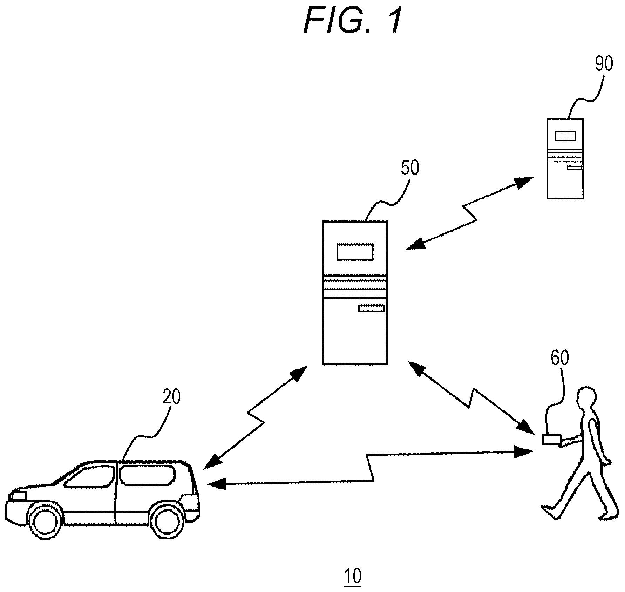

Fig. 1 illustrates a configuration of a vehicle management system. A vehicle management system 10 is configured by using a vehicle 20, a vehicle management device (service server) that manages data related to a vehicle 50, and a terminal device 60. Note that in order to facilitate explanation, Fig. 1 shows only the shared vehicle 20 used by a user, and the terminal device 60 possessed by a use scheduled person. In addition, the vehicle management system 10 may be configured by using an information providing device 90 that provides the vehicle management device 50 with various kinds of information including, for example, traffic information, weather information, shop information, and the like. Moreover, the vehicle management system 10 may be configured in such a manner that a user possesses a terminal device, and the terminal device possessed by the user is used to communicate with the vehicle management device 50 and the terminal device 60 of the use scheduled person. Note that the description below shows a case where a user uses the vehicle 20 as a terminal device.

### <2. Configuration of vehicle>

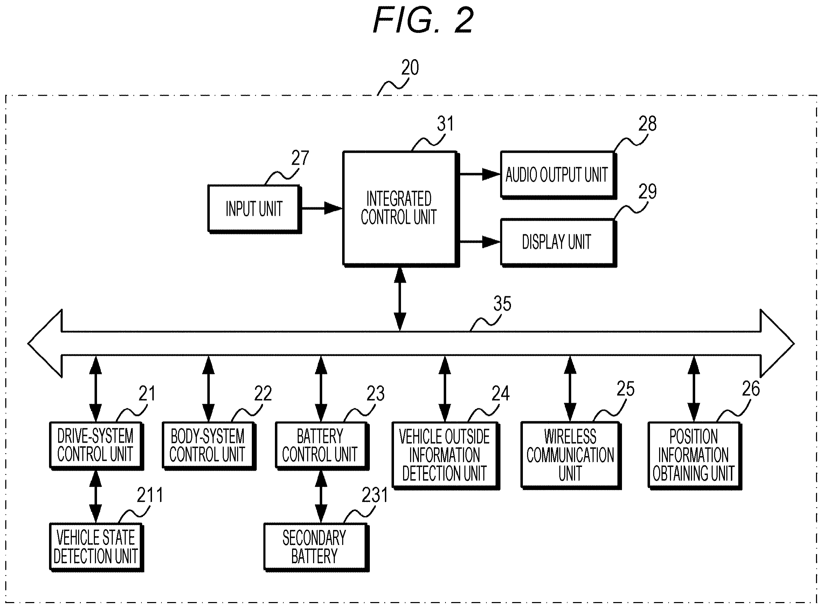

Fig. 2 illustrates a configuration of a vehicle. The vehicle 20 is provided with a plurality of control units and a plurality of detection units, the control units and the detection units being connected to one another through a communication network 35. In an example shown in Fig. 2, the vehicle 20 is provided with a drive-system control unit 21, a body-system control unit 22, a battery control unit 23, a vehicle outside information detection unit 24, a wireless communication unit 25, a position information obtaining unit 26, and an integrated control unit 31. The communication network 35 may be, for example, an in-vehicle communication network in conformity with arbitrary standards such as Controller Area Network (CAN), Local Interconnect Network (LIN), Local Area Network (LAN), or FlexRay (registered trademark). In addition, an input unit 27, an audio output unit 28, and a display unit 29 are connected to the integrated control unit 31.

Each control unit is provided with: a microcomputer that performs computation processing according to various kinds of programs; a storage unit that stores a program executed by the microcomputer, or parameters or the like used for various kinds of computations; and a driving circuit that drives various kinds of devices to be controlled.

The drive-system control unit 21 controls the operation of a device related to a drive system of the vehicle according to various kinds of programs. For example, the drive-system control unit 21 functions as: a driving force generator that produces the driving force of the vehicle, such as an internal combustion engine or a driving motor; a driving force transmission mechanism for transferring the driving force to a wheel; and a steering mechanism for adjusting a rudder angle of the vehicle. In addition, the drive-system control unit 21 may have a function as a control device such as a braking device for generating the braking force of the vehicle, and a function as a control device such as Antilock Brake System (ABS) or Electronic Stability Control (ESC).

The vehicle state detection unit 211 is connected to the drive-system control unit 21. The vehicle state detection unit 211 includes at least one of, for example, a gyro sensor that detects an angular speed of shaft rotary motion of a vehicle body, an acceleration sensor that detects acceleration of the vehicle, and a sensor for detecting the operation amount of an accelerator pedal, the operation amount of a brake pedal, an steering angle of a steering wheel, an engine rotational frequency, a traveling speed, or the like. The drive-system control unit 21 performs computation processing by using a signal input from the vehicle state detection unit 211, and controls an internal combustion engine, a driving motor, an electrically-driven power steering device, a brake device, or the like.

The body-system control unit 22 controls the operation of various kinds of devices provided in the vehicle body according to various kinds of programs. For example, the body-system control unit 22 functions as a control device for a keyless entry system, a smart key system, a power window device, or a head lamp, a back lamp, a brake lamp, a blinker, or various kinds of lamps such as a fog lamp. In this case, an electrical wave transmitted from a portable device that is substituted for a key, or signals of various switches, can be input into the body-system control unit 22. The body-system control unit 22 accepts the input of the electrical wave or the signals, and controls a door lock device, a power window device, a lamp, and the like of the vehicle.

The battery control unit 23 controls a secondary battery 231, which is an electric power supply source of the driving motor, according to various kinds of programs. For example, information including a battery temperature, a battery output voltage, a remaining capacity of a battery, or the like is input into the battery control unit 23 from a battery device provided with the secondary battery 231. The battery control unit 23 performs computation processing by using these signals, and performs the temperature adjustment control of the secondary battery 231 or performs the control of a cooling device or the like that is provided in the battery device.

The vehicle outside information detection unit 24 detects information of the outside of the vehicle equipped with the vehicle management system 10. For example, the vehicle outside information detection unit 24 captures an image of a peripheral area of the vehicle, and performs, for example, detection of surrounding target objects (for example, persons, other vehicles, etc.) to be visually recognized, and estimation of positions of the detected target objects to be visually recognized, on the basis of the captured image.

The wireless communication unit 25 communicates with the vehicle management device 50 or the like through a wireless communication network such as Dedicated Short Range Communication (DSRC) (registered trademark), and outputs received information to the integrated control unit 31. In addition, the wireless communication unit 25 transmits the information or the like obtained by the vehicle outside information detection unit 24 to the vehicle management device 50 or the like. Note that the wireless communication unit 25 may communicate with the vehicle management device 50 and the terminal device 60 through a wireless communication network such as a wireless communication network of a wireless LAN, and a wireless communication network for portable telephones such as 2G, LTE, and 4G.

The position information obtaining unit 26 obtains position information indicating a current position. The position information obtaining unit 26 obtains position information by receiving a positioning signal, for example, a signal of a global positioning system (Global Navigation Satellite System (GNSS)) and the like, and then by calculating a current position on the basis of the received positioning signal. The position information obtaining unit 26 outputs the obtained position information to the integrated control unit 31.

The input unit 27 is realized by a device that allows a driver or the like to perform input operation, the device including, for example, an operation button, a microphone, an operation switch or an operation lever, a touch panel provided on a screen of the display unit 29, and the like. The input unit 27 generates an input signal on the basis of information input by a driver or the like, and outputs the input signal to the integrated control unit 31. For example, a user interface screen described later is displayed on the screen of the display unit 29, and the input unit 27 outputs an input signal to the integrated control unit 31, the input signal indicating that user operation has been performed at a display position of an operation button of the user interface screen. Accordingly, from the user interface screen displayed in the display unit 29, and from a user operation position based on the input signal, the integrated control unit 31 is capable of determining that the operation button has been operated.

The audio output unit 28 audibly notifies a driver or the like of various kinds of information by performing audio output on the basis of an audio signal output from the integrated control unit 31. The display unit 29 displays a user interface screen or the like as described later on the basis of an image signal from the integrated control unit 31, and visually notifies a driver or the like of various kinds of information.

The integrated control unit 31 includes a Central Processing Unit (CPU), a Read Only Memory (ROM), a Random Access Memory (RAM), and the like. The Read Only Memory (ROM) stores various kinds of programs executed by the Central Processing Unit (CPU). The Random Access Memory (RAM) stores information including various kinds of parameters, a computation result, a sensor value, or the like. The CPU executes the various kinds of programs stored in the ROM, and controls the overall operation of the vehicle 20 according to, for example, an input signal from the input unit 27, information obtained by communicating with each control unit, each detection unit, and the wireless communication unit through the communication network 35, and information stored in the RAM. In addition, the integrated control unit 31 generates an audio signal indicating various kinds of information of which a driver or the like is audibly notified, and then outputs the audio signal to the audio output unit 28, and generates an image signal indicating various kinds of information of which the driver or the like is visually notified, and then outputs the image signal to the display unit 29. Further, the integrated control unit 31 supports traveling of the vehicle, for example, performs navigation or the like to a destination, on the basis of position information obtained by the position information obtaining unit 26, map information stored in the ROM or the RAM, and the like. Moreover, the integrated control unit 31 uses the wireless communication unit 25 to communicate with the vehicle management device 50, the terminal device 60, and the like. By communicating with the vehicle management device 50, the terminal device 60, and the like, as described later, the integrated control unit 31 performs, for example, processing of notifying the vehicle management device 50 of position information indicating a current position, agreement procedure processing related to delivery conditions between the driver or the like and the vehicle management device 50, and processing of negotiation with an owner of the terminal device 60 for delivery conditions in response to transmitting, to the vehicle management device 50, position information, or the estimated time of arrival at a delivery position at which the vehicle is delivered from the user to the use scheduled person, the estimated time of arrival having been estimated on the basis of the position information. Furthermore, the integrated control unit 31 may use a navigation function to calculate a destination, in other words, the estimated time of arrival at a delivery position of the vehicle 20, on the basis of a traveling state, a current position, or the like of the vehicle 20, and then to transmit information indicating the calculated estimated time of arrival to the vehicle management device 50.

Note that in the example shown in Fig. 2, at least two control units that are connected through the communication network 35 may be unified as one control unit. Alternatively, each individual control unit may include a plurality of control units. Moreover, the vehicle 20 may be provided with a different control unit that is not illustrated. Further, in the above explanation, a part or all of functions taken charge of by any of the control units may be taken charge of by another control unit. In other words, if information is transmitted and received through the communication network 35, predetermined computation processing may be performed by any of the control units. Furthermore, in a case where the vehicle 20 is used as a terminal device of the user, the wireless communication unit 25, the position information obtaining unit 26, the input unit 27, the audio output unit 28, the display unit 29, the integrated control unit 31, and the like of the vehicle 20 serve as functional blocks that constitute the terminal device of the user.

### <3. Configuration of vehicle management device>

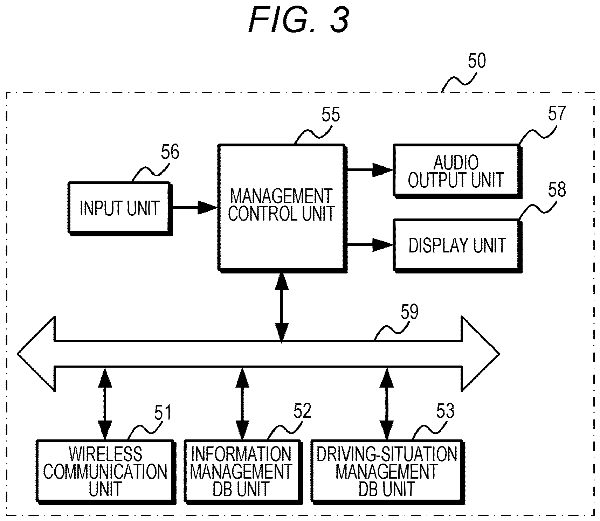

Fig. 3 illustrates a configuration of the vehicle management device. The vehicle management device 50 includes the wireless communication unit 51, an information management database unit 52, a driving-situation management database unit 53, and a vehicle management unit 55. The units of the vehicle management device 50 are each connected through the network 59.

The wireless communication unit 51 communicates with the vehicle 20 through a wireless communication network such as Dedicated Short Range Communication (DSRC) (registered trademark), and outputs received information to the information management database unit 52 and the driving-situation management database unit 53. In addition, the wireless communication unit 51 transmits information, which has been output from the vehicle management unit 55, to the vehicle 20 and the terminal device 60. Note that the wireless communication unit 51 may communicate with the vehicle 20 and the terminal device 60 through a wireless communication network such as a wireless communication network of a wireless LAN, and a wireless communication network for portable telephones such as 2G, LTE, and 4G.

The information management database unit 52 stores vehicle position information, which has been transmitted from the vehicle 20, together with time information on a vehicle basis. The driving-situation management database unit 53 stores information related to the driving situation of the vehicle on a vehicle basis.

In addition, an input unit 56, an audio output unit 57, and a display unit 58 are connected to the vehicle management unit 55.

The input unit 56 is realized by a device that allows a vehicle manager to perform input operation, the device including, for example, a touch panel, an operation button, an operation switch, and the like. The input unit 56 generates an input signal corresponding to operation input by the vehicle manager or the like, and then outputs the input signal to the vehicle management unit 55.

The audio output unit 57 audibly notifies the vehicle manager of various kinds of information by performing audio output based on an audio signal output from the vehicle management unit 55. The display unit 58 visually notifies the vehicle manager of various kinds of information by performing image display on the basis of an image signal from the vehicle management unit 55.

The vehicle management unit 55 manages a position and a driving situation on a vehicle basis on the basis of data stored in the information management database unit 52 and the driving-situation management database unit 53, and performs management control of a vehicle in such a manner that the vehicle is smoothly delivered from the user to the use scheduled person.

Note that Fig. 3 shows a case where the information management database unit 52, the driving-situation management database unit 53, and the vehicle management unit 55 are integrally provided. However, each of the information management database unit 52, the driving-situation management database unit 53, and vehicle management unit 55 may be provided as an individually independent device.

### <4. Configuration of terminal device>

The terminal device 60 can be carried by a use scheduled person, and has only to include: a wireless communication unit that communicates with the vehicle 20 and the vehicle management device 50; a display unit that displays information received from the vehicle 20 and the vehicle management device 50; and an input unit that accepts the operation of the use scheduled person. For example, a portable telephone (a smart phone, a feature phone) or the like is used as the terminal device 60. Note that in a case where, for example, a portable telephone or the like is used as a terminal device of a user, the portable telephone or the like is provided with not only the wireless communication unit, the display unit, and the input unit, but also a position information obtaining unit that obtains position information indicating a current position.

### <5. Operation of vehicle management system>

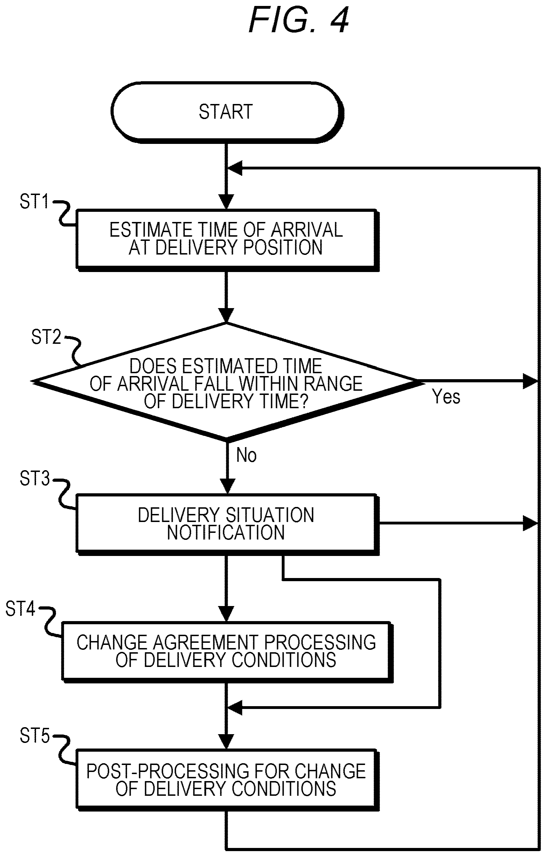

Next, the operation of the vehicle management system will be described. Fig. 4 is a flowchart illustrating the operation of the vehicle management system. In step ST1, the vehicle management system 10 estimates the time of arrival at a delivery position.
The delivery position is a place where a user of the vehicle 20 delivers the vehicle 20 to a use scheduled person, and the delivery position is set beforehand when, for example, a procedure or the like for reservation for using the vehicle 20 is performed. On the basis of position information transmitted from the vehicle 20, the vehicle management device 50 of the vehicle management system 10 estimates the time of arrival at the delivery position at which the vehicle 20 arrives. In addition, by using traffic information, weather information and the like obtained from the information providing device 90, the vehicle management device 50 is capable of estimating the time of arrival with higher accuracy in comparison with a case where these pieces of information are not used. Moreover, as described above, the time of arrival may be estimated in the vehicle 20 by using a navigation function, and subsequently information indicating the estimated time of arrival is transmitted from the vehicle 20 to the vehicle management device 50. The vehicle management system 10 estimates the time of arrival at the delivery position, and the process proceeds to step ST2.

In step ST2, the vehicle management system 10 determines whether or not the estimated time of arrival falls within a delivery time range. The delivery time is the scheduled time at which the user of the vehicle 20 delivers the vehicle 20 to the use scheduled person. The delivery time is set beforehand together with the delivery position when, for example, a procedure or the like for reservation for using the vehicle 20 is performed. In addition, a predetermined time range including the delivery time (hereinafter, referred to as a "delivery time range") is set beforehand with reference to the delivery time of the vehicle 20. It is assumed that the delivery time range is, for example, a time range from the predetermined early arrival time until the acceptable delayed time with reference to the delivery time. Note that the delivery time range may be adapted to be settable or changeable by a procedure for reservation for use or the like. Thus, setting the delivery time range enables not only a case where the time of arrival is the delivery time, but also, for example, a case where the time of arrival differs from the delivery time as the result of providing the vehicle cleaning time or the like before the use by the use scheduled person to be coped with. In a case where the vehicle management device 50 of the vehicle management system 10 determines that the estimated time of arrival falls within the delivery time range, the process returns to step ST1, and in a case where the vehicle management device 50 determines that the estimated time of arrival does not fall within the delivery time range, the process proceeds to step ST3.

In step ST3, the vehicle management system 10 notifies the user and the use scheduled person of a delivery situation. The estimated time of arrival at the delivery position of the vehicle 20 does not fall within the delivery time range, and therefore the vehicle management device 50 of the vehicle management system 10 transmits a delivery situation notification to the terminal device of the user of the vehicle 20 and the terminal device of the use scheduled person. In addition, in the vehicle management device 50, the process returns to step ST1, or proceeds to step ST4 or step ST5, according to the delivery situation. Note that the delivery situation notification will be described in detail later.

In step ST4, the vehicle management system 10 performs change agreement processing of delivery conditions. The estimated time of arrival does not fall within the delivery time range, and therefore the vehicle 20 and the terminal device 60 in the vehicle management system 10 agree on a change of delivery conditions, or negotiate for a change of delivery conditions, for example. In addition, the vehicle 20 notifies the vehicle management device 50 of delivery conditions determined by the result of agreement, or by negotiation for changing, as agreed delivery conditions, and the process proceeds to step ST5.

In step ST5, the vehicle management system 10 performs post-processing for the change of delivery conditions. The vehicle management device 50 of the vehicle management system 10 stores delivery conditions responded from the vehicle 20 or the terminal device 60, for example, a delay reason why the vehicle 20 is delayed, and delivery conditions agreed between the user and the use scheduled person. Furthermore, the delivery position and the delivery time are updated on the basis of the agreed delivery conditions, and the process returns to step ST1.

### <5-1. Operation performed in a case where the estimated time of arrival is delayed than a delivery time range>

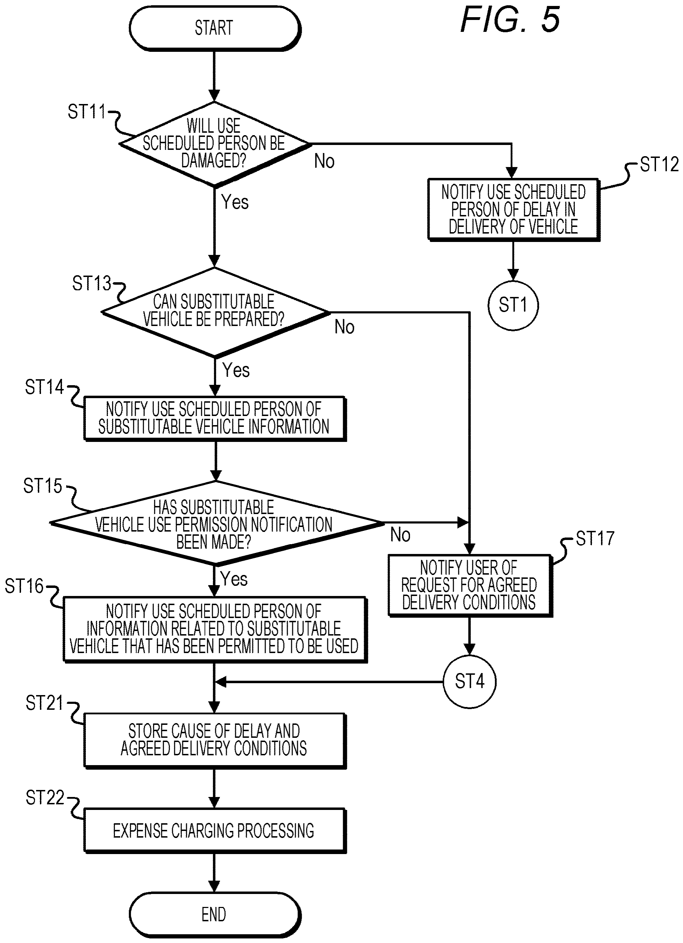

Fig. 5 is a flowchart partially illustrating the operation of the vehicle management device performed in a case where the estimated time of arrival is delayed than a delivery time range. Fig. 5 illustrates the operation of steps ST3 and ST5 in Fig. 4. Note that the operation of steps ST11 to ST17 in Fig. 5 corresponds to the operation of step ST3 in Fig. 4, and that the operation of steps ST21 and ST22 in Fig. 5 corresponds to the operation of step ST5 in Fig. 4.

In a case where the estimated time of arrival is delayed than the delivery time range, the vehicle management device 50 transmits a substitutable vehicle offering notification to the terminal device 60, and transmits information related to the delayed arrival to the vehicle 20, as a delivery situation notification.

In step ST11, the vehicle management device 50 determines whether or not the use scheduled person is damaged. For example, even if the estimated time of arrival is delayed than the delivery time range, if a position at the delivery time is in the vicinity of the delivery position, and falls within an allowable range, the vehicle management device 50 determines that the use scheduled person will not be damaged, and the process proceeds to step ST12. In addition, for example, in a case where the estimated time of arrival is delayed than the delivery time range, and in a case where a position at the time of arrival is away from the delivery position, the use scheduled person cannot use the vehicle 20 on schedule. Therefore, the vehicle management device 50 determines that the use scheduled person will be damaged, and thus the process proceeds to step ST13.

In step ST12, the vehicle management device 50 notifies the user of a delay in delivery of the vehicle. Since the use scheduled person will not be damaged, the vehicle management device 50 transmits, for example, information indicating a delay of the vehicle, an estimated position at the delivery time, and the like to the vehicle 20 as a delivery situation notification to the user, and the process returns to step ST1 in Fig. 4.

In step ST13, the vehicle management device 50 determines whether or not the substitutable vehicle can be prepared. On the basis of information related to the driving situation of the vehicle, the vehicle management device 50 determines whether or not a substitutable vehicle for the vehicle that is scheduled to be used by the use scheduled person is available. In a case where the vehicle management device 50 determines that the substitutable vehicle can be prepared, the process proceeds to step ST14; and in a case where the vehicle management device 50 determines that the substitutable vehicle cannot be prepared, the process proceeds to step ST17.

In step ST14, the vehicle management device 50 notifies the use scheduled person of substitutable vehicle information. The vehicle management device 50 transmits substitutable vehicle information (for example, information including a vehicle type, whether or not a substitutable vehicle is a no-smoking vehicle, the remaining amount of fuel, and the like), which is information related to one or more substitutable vehicles, and which can be used as a delivery situation notification to the use scheduled person, to the terminal device 60 of the use scheduled person, and the process proceeds to step ST15.

In step ST15, the vehicle management device 50 determines whether or not a substitutable vehicle use permission notification has been made. In a case where the use of the substitutable vehicle is selected from the terminal device 60 of the use scheduled person, the vehicle management device 50 determines that the substitutable vehicle can be used, and the process proceeds to step ST16. In a case where the use of the reserved vehicle is selected, the vehicle management device 50 determines that the substitutable vehicle cannot be used, and the process proceeds to step ST17.

In step ST16, the vehicle management device 50 notifies the use scheduled person of information related to the substitutable vehicle, the use of which has been permitted. The vehicle management device 50 prepares the substitutable vehicle in such a manner that the use scheduled person can use the substitutable vehicle at the delivery position and the delivery time that have been set. In addition, the vehicle management device 50 transmits, for example, information indicating that the substitutable vehicle is prepared, and substitutable vehicle information related to the prepared substitutable vehicle, to the terminal device 60 of the use scheduled person, and then the process proceeds to step ST21.

In step ST17, the vehicle management device 50 notifies the user of a request for agreed delivery conditions. The vehicle management device 50 transmits a request notification for agreed delivery conditions to the terminal device of the user as delivery conditions. The vehicle management device 50 includes, in the request notification for agreed delivery conditions, for example, information related to compensation to the use scheduled person for the delay in delivery (for example, information of the amount of compensation). In addition, the vehicle management device 50 includes, in the request notification for agreed delivery conditions, for example, a mail address, a telephone number, or the like of the terminal device 60 as contact information of the use scheduled person, for example, so as to enable negotiation with the use scheduled person for changing delivery conditions in a case where the user does not accept the compensation to the use scheduled person. The vehicle management device 50 transmits the request notification for agreed delivery conditions to the vehicle 20, and the process proceeds to step ST4 in Fig. 4.

After the processing of step ST4 described above, in step ST21, the vehicle management device 50 stores a cause of the delay, and the agreed delivery conditions obtained in step ST4. The vehicle management device 50 stores whether the cause of the delay has originated from the behavior of the user (for example, a side trip, a stop, etc.) or the irresistible force (for example, an accident, a traffic congestion, etc.). In addition, the vehicle management device 50 stores agreed delivery conditions that have been agreed by the negotiation for changing delivery conditions (for example, new delivery time, a new delivery position, compensation from the user to the use scheduled person for the delay, etc.). The vehicle management device 50 stores the cause of the delay and the agreed delivery conditions, and the process proceeds to step ST22.

In step ST22, the vehicle management device 50 performs expense charging processing. In a case where the cause of the delay has originated from the behavior of the user, the vehicle management device 50 charges the compensation (for example, compensation money) corresponding to the delay by adding the compensation to the use fee of the vehicle 20, on the basis of contract or the like agreed beforehand. Moreover, in a case where the compensation from the user to the use scheduled person has been accepted in the negotiation for changing delivery conditions, the vehicle management device 50 charges the user for this compensation (for example, compensation money) by adding the compensation to the use fee of the vehicle 20. Note that the vehicle management device 50 performs payment for the compensation to the use scheduled person.

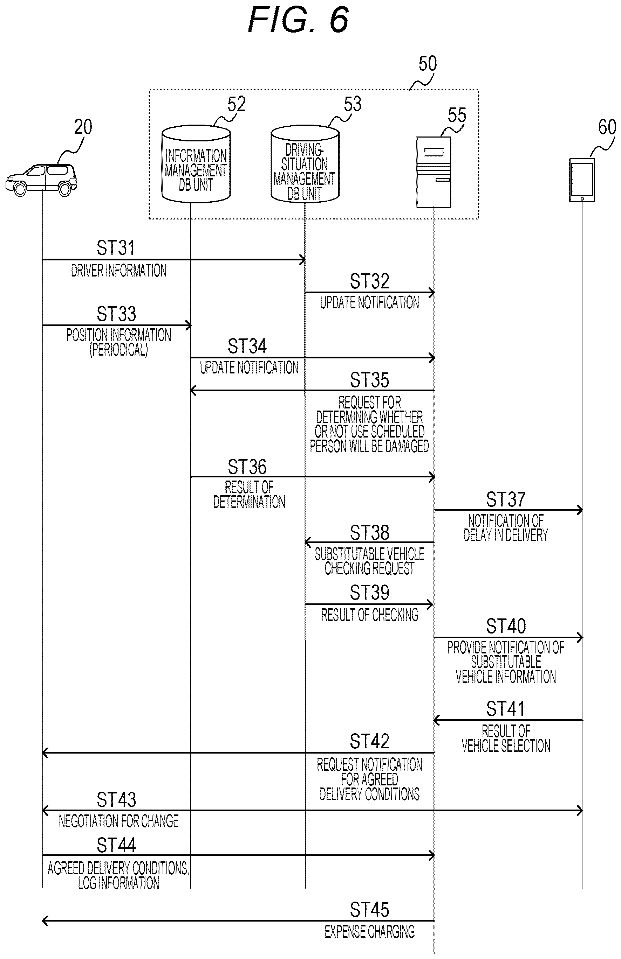

Fig. 6 is a sequence diagram illustrating the operation of the vehicle, the operation of the vehicle management device, and the operation of the information terminal. Note that Fig. 6 also illustrates the operation between a database unit and the vehicle management unit in the vehicle management device.

In step ST31, the vehicle 20 transmits driver (user) information of a driver who starts using the vehicle 20 to the vehicle management device 50, and the vehicle management device 50 stores the driver information transmitted from the vehicle 20 in the driving-situation management database unit 53.

In step ST32, the driving-situation management database unit 53 of the vehicle management device 50 transmits an update notification of updating information related to a driving situation to the vehicle management unit 55, and the vehicle management unit 55 starts managing the use of the vehicle 20 by the user indicated by the driver information.

In step ST33, the vehicle 20 periodically transmits position information indicating a current position to the vehicle management device 50, and the vehicle management device 50 stores the position information transmitted from the vehicle 20 in the information management database unit 52 together with time information.

In step ST34, the information management database unit 52 transmits an information update notification to the vehicle management unit 55 every time position information is stored.

In step ST35, the vehicle management unit 55 transmits, to the information management database unit 52, a request for determining whether or not the use scheduled person will be damaged.

In step ST36, the information management database unit 52 transmits the result of determination to the vehicle management unit 55. According to the determination request from the vehicle management unit 55, the information management database unit 52 calculates the estimated time of arrival at the delivery position on the basis of position information of the vehicle 20 and time information corresponding to the position information. In addition, as with step ST11 described above, the information management database unit 52 determines whether or not the use scheduled person will be damaged if the estimated time of arrival is delayed than the delivery time range, and transmits the result of determination to the vehicle management unit 55.

In step ST37, in a case where the result of determination from the information management database unit 52 indicates that the use scheduled person will be damaged, the vehicle management unit 55 notifies the use scheduled person of a delivery situation, and transmits information indicating the delay in delivery of the vehicle to the terminal device 60 of the use scheduled person. In addition, in step ST38, the vehicle management unit 55 transmits, to the driving-situation management database unit 53, a substitutable vehicle checking request for checking whether or not there is an available substitutable vehicle. The vehicle management unit 55 generates a substitutable vehicle checking request that includes information related to, for example, the delivery position at which the vehicle is delivered to the use scheduled person, the delivery time, a vehicle-use scheduled time period, and the like, and transmits the substitutable vehicle checking request to the driving-situation management database unit 53.

In step ST39, the driving-situation management database unit 53 transmits, to the vehicle management unit 55, the result of checking for the substitutable vehicle checking request. On the basis of, for example, the stored driving situation, and the use conditions of the use scheduled person indicated by the substitutable vehicle checking request, the driving-situation management database unit 53 detects an available substitutable vehicle that can be used by the use scheduled person, and transmits substitutable vehicle information related to the available substitutable vehicle to the vehicle management unit 55 as the result of checking.

In step ST40, in a case where substitutable vehicle information is indicated by the result of checking from the driving-situation management database unit 53, the vehicle management unit 55 notifies the use scheduled person of a delivery situation, and transmits the substitutable vehicle information to the terminal device 60 of the use scheduled person.

In step ST41, the terminal device 60 transmits the result of vehicle selection to the vehicle management unit 55. The terminal device 60 displays the substitutable vehicle information to prompt the use scheduled person to select the substitutable vehicle or the reserved vehicle. The terminal device 60 transmits, to the vehicle management unit 55, the result of vehicle selection corresponding to the selection operation by the use scheduled person.

In step ST42, the vehicle management unit 55 transmits a request notification for agreed delivery conditions to the vehicle 20. In a case where the reserved vehicle has been selected by the result of vehicle selection from the terminal device 60, the vehicle management unit 55 transmits a request notification for agreed delivery conditions to the vehicle 20. The vehicle management unit 55 includes, in the request notification for agreed delivery conditions, for example, information including: the compensation for the delay in the estimated time of arrival; contact information of the use scheduled person; and the like. In addition, the vehicle management unit 55 causes, for example, the acceptance of the compensation, or delivery conditions agreed by the negotiation for changing the delivery conditions between the user and the use scheduled person whose contact information is indicated, to respond to this request notification as agreed delivery conditions. Note that although not illustrated, in a case where the substitutable vehicle has been selected by the result of vehicle selection from the terminal device 60, the vehicle management unit 55 prepares the selected substitutable vehicle to enable the use of the selected substitutable vehicle according to a schedule of the use scheduled person.

In step ST43, the vehicle 20 negotiates with the terminal device 60 for changing delivery conditions. In a case where it is determined that non-acceptance operation has been performed by the user for the request notification for agreed delivery conditions, the vehicle 20 negotiates with the terminal device 60 for changing delivery conditions. It should be noted that the negotiation for changing delivery conditions will be described in detail later.

In step ST44, the vehicle 20 transmits agreed delivery conditions and log information to the vehicle management unit 55. In a case where the compensation to the use scheduled person indicated by the request notification for agreed delivery conditions is accepted, the vehicle 20 transmits the acceptance to the vehicle management unit 55 as agreed delivery conditions. In addition, in a case where non-acceptance operation of the user is performed for the compensation indicated by the request notification, the vehicle 20 communicates with the terminal device 60 to perform negotiation between the user and the use scheduled person for changing the delivery conditions. Further, the vehicle 20 transmits the delivery conditions agreed between the user and the use scheduled person, for example, information including the result of changing the delivery time, the compensation accompanying the change of the delivery time, and the like to the vehicle management unit 55 as agreed delivery conditions. Moreover, the vehicle 20 transmits information including the smoking detection result, the remaining amount of fuel, and the like to the vehicle management unit 55 as log information.

In step ST45, the vehicle management unit 55 charges the user of the vehicle 20 for expenses. The vehicle management unit 55 adds the compensation provided in a case where the cause of the delay has originated from the user, or the compensation (for example, compensation money) to the use scheduled person accepted by the user in the negotiation for changing the delivery conditions, to the vehicle use fee, and charges the user of the vehicle 20 for expenses. Furthermore, although not illustrated, the vehicle management unit 55 pays the compensation money to the use scheduled person, or reduces the compensation money from the vehicle use fee of the use scheduled person.

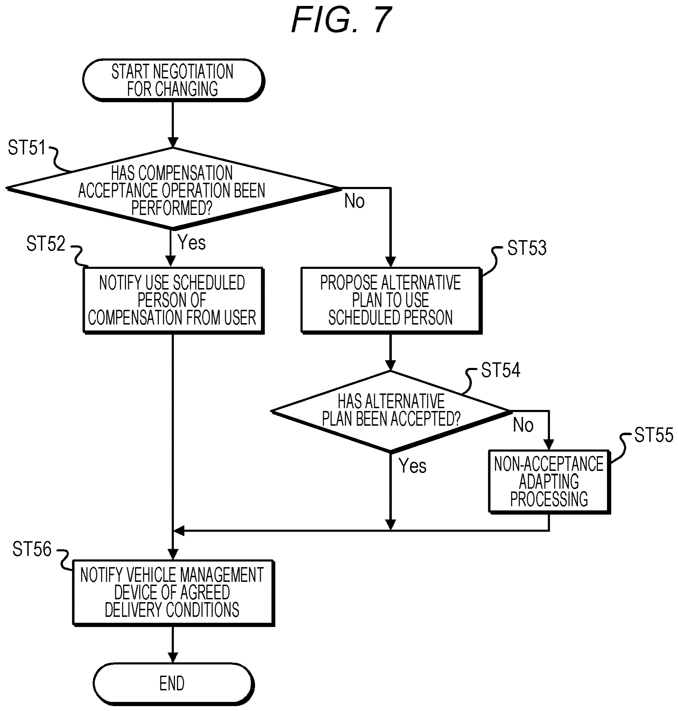

Fig. 7 is a flowchart illustrating response processing for a request notification for agreed delivery conditions. In Fig. 7, the vehicle 20 starts response processing in response to receiving a request notification for agreed delivery conditions from the vehicle management device 50. Note that as described above, the request notification for agreed delivery conditions includes, for example, information including: the compensation prescribed beforehand according to a delay in the delivery time by the contract or the like; contact information of the use scheduled person; and the like.

In step ST51, the vehicle 20 determines whether or not compensation acceptance operation has been performed. In a case where the vehicle 20 determines that acceptance operation in which the user accepts the compensation to the use scheduled person indicated by the request notification has been performed, the process proceeds to step ST52. In a case where the vehicle 20 determines that non-acceptance operation in which the compensation is not accepted has been performed, the process proceeds to step ST53.

In step ST52, the vehicle 20 notifies the use scheduled person of the compensation from the user. The vehicle 20 transmits, for example, a compensation money payment notification indicated from the vehicle management device 50 to the terminal device 60 of the use scheduled person, and the process proceeds to step ST56.

In step ST53, the vehicle 20 proposes an alternative plan to the use scheduled person. The vehicle 20 displays an alternative plan input screen to prompt the user to set an alternative plan. The vehicle 20 creates an alternative plan according to the operation of the user. In addition, the vehicle 20 transmits, to the terminal device 60, an alternative plan based on delivery conditions indicating, for example, information related to: the new delivery time; and the amount of compensation corresponding to the change of the delivery time. Subsequently, the process proceeds to step ST54.

In step ST54, the vehicle 20 determines whether or not the alternative plan has been accepted. In the vehicle 20, in a case where a reply from the terminal device 60 to the alternative plan of step ST53 indicates acceptance of the alternative plan, the process proceeds to step ST56. In a case where the reply indicates non-acceptance of the alternative plan, the process proceeds to step ST55.

In step ST55, the vehicle 20 performs non-acceptance adapting processing. As the non-acceptance adapting processing of the vehicle 20, the user may propose a new alternative plan to the use scheduled person again, or the use scheduled person may propose a new alternative plan to the user. In the vehicle 20, in a case where an alternative plan proposed by one of the user and the use scheduled person has been accepted by the other, the process proceeds to step ST56. In addition, in a case where an alternative plan is not accepted even if the alternative plan has been proposed the predetermined number of times, the vehicle 20 determines that the delivery conditions prescribed in the contract or the like beforehand, for example, the compensation to the use scheduled person indicated by the request notification for agreed delivery conditions, have been accepted. Subsequently, the process proceeds to step ST56. Note that the vehicle 20 transmits, to the terminal device 60, the user's acceptance of the alternative plan proposed by the use scheduled person, or the user's acceptance of the delivery conditions prescribed in the contract or the like beforehand.

In step ST56, the vehicle 20 notifies the vehicle management device of the agreed delivery conditions. The vehicle 20 transmits the acceptance of the compensation to the use scheduled person indicated by the request notification for agreed delivery conditions, or the delivery conditions agreed between the user and the use scheduled person whose contact information is indicated, to the vehicle management device 50 as agreed delivery conditions.

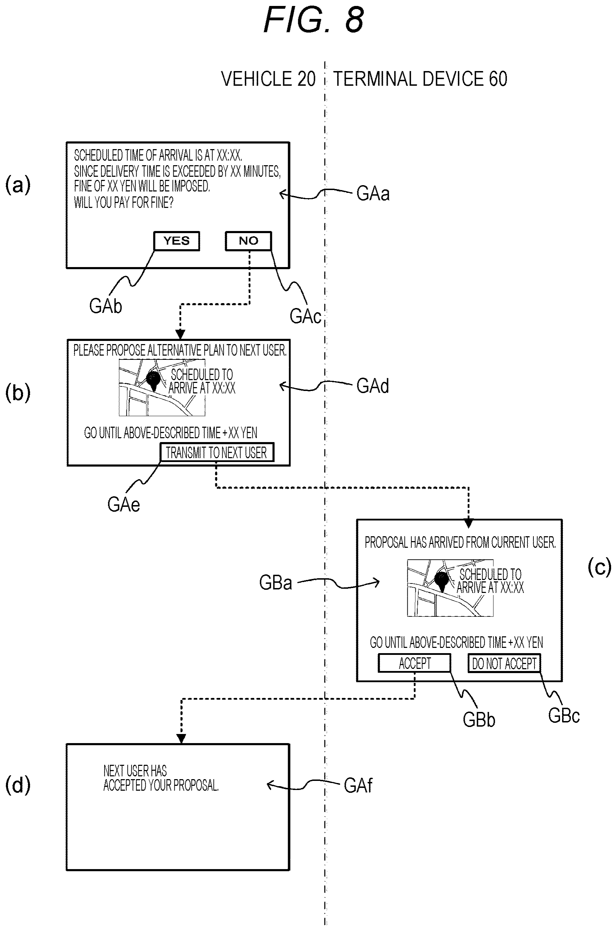

Fig. 8 illustrates a user interface screen of response processing for a request notification for agreed delivery conditions. Note that Fig. 8 shows: a user interface screen that is used by the user in the negotiation for changing delivery conditions, and that uses a display unit of the vehicle 20; and a user interface screen that uses a display unit of the terminal device 60 of the use scheduled person. Image data for displaying the user interface screen, a control program for executing the operation corresponding to the operation manipulated on the basis of the user interface screen, and the like, are transmitted from the vehicle management device 50 to the vehicle 20 by being included in, for example, the request notification for agreed delivery conditions. In addition, the image data and the control program may be stored in the vehicle 20 and the terminal device 60 beforehand from the vehicle management device 50 so as to be used according to a notification from the vehicle management device 50.
(a) of Fig. 8 is a user interface screen displayed when a request notification for agreed delivery conditions has been received in the vehicle 20. The screen is provided with, for example: a display screen GAa that shows the delay time, and the amount of compensation caused by a delay; an acceptance operation button GAb used by the user to accept payment of the compensation money to the use scheduled person; and a non-acceptance operation button GAc used to refuse payment. When it is determined that the acceptance operation button GAb has been operated, the vehicle 20 transmits the acceptance of the payment of the compensation money indicated by the request notification for agreed delivery conditions to the vehicle management device 50 as agreed delivery conditions. Moreover, when it is determined that the non-acceptance operation button GAc has been operated, the vehicle 20 performs negotiation for changing delivery conditions.
(b) of Fig. 8 illustrates a user interface screen displayed when negotiation for changing delivery conditions is started in the vehicle 20. The screen displays an alternative plan input screen GAd, for example, a screen for specifying the delivery time that is a delivery condition, and an input screen for inputting information related to the compensation accepted by the user for the use scheduled person, for example, the compensation money, and a transmission instruction button GAe for transmission to the use scheduled person. The user inputs an alternative plan, and then operates the transmission instruction button GAe. At this point of time, the vehicle 20 transmits an alternative plan that shows information indicating the new delivery time, and information related to the compensation accepted by the user for the use scheduled person, to the terminal device 60 of the use scheduled person. Note that in order to protect information related to the use scheduled person, the contact information or the like of the use scheduled person is not displayed on the screen.
(c) of Fig. 8 illustrates a user interface screen displayed when an alternative plan has been received in the terminal device 60. The screen is provided with an alternative plan display screen, for example: a display screen GBa that indicates the delivery time after the change, and the amount of compensation; an acceptance operation button GBb that is operated when an alternative plan is accepted; and a non-acceptance operation button GBc that is operated when an alternative plan is not accepted. The terminal device 60 transmits, to the vehicle 20, an alternative-plan response result corresponding to the operation of the acceptance operation button GBb or the non-acceptance operation button GBc.
(d) of Fig. 8 illustrates a user interface screen displayed when the alternative-plan response result has been received from the terminal device 60 in the vehicle 20. The alternative-plan response result GAf is displayed on the screen. Note that (d) of Fig. 8 shows a case where the alternative plan has been accepted by the use scheduled person.

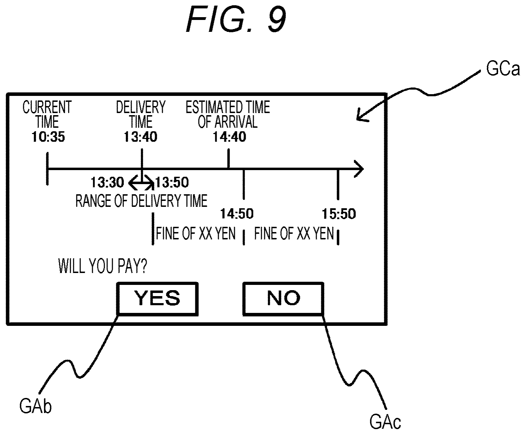

In addition, Fig. 9 illustrates another user interface screen displayed when a request notification for agreed delivery conditions has been received. Fig. 9 illustrates a case where the relationship between a delay and the amount of compensation is visualized. As an alternative to the display screen GAa in (a) of Fig. 8, the user interface screen displays a display screen GCa that time-sequentially indicates the current time, the delivery time, a delivery time range, the estimated time of arrival, and delay-time-based compensation (fine).

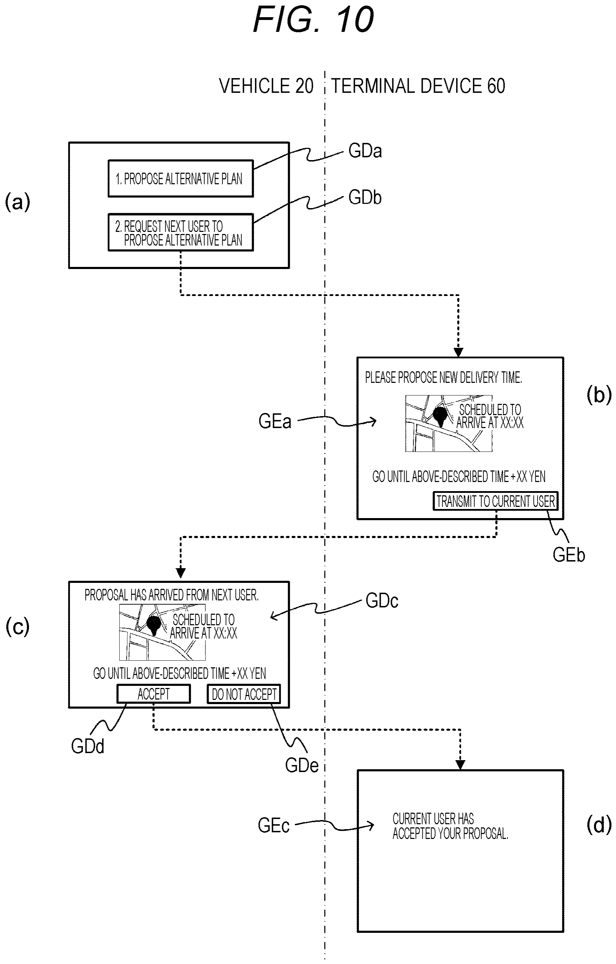

Fig. 10 illustrates a user interface screen displayed in a case where an alternative-plan response result indicates non-acceptance. Note that Fig. 10 also shows: a user interface screen that is used by the user in the negotiation for changing delivery conditions, and that uses a display unit of the vehicle 20; and a user interface screen that uses a display unit of the terminal device 60 of the use scheduled person. The vehicle 20 transmits, to the terminal device of the use scheduled person, an alternative plan that indicates an acceptance request to accept changing delivery conditions. In a case where a response informing of not accepting is received from the terminal device of the use scheduled person, a user interface screen shown in (a) of Fig. 10 is displayed.
(a) of Fig. 10 is a user interface screen displayed in a case where the alternative-plan response result is non-acceptance in the vehicle 20. For example, an operation button GDa for presenting an alternative plan again, and an operation button GDb for requesting the use scheduled person to propose an alternative plan, are provided on the screen. When it is determined that the operation button GDb for requesting the use scheduled person to propose an alternative plan has been operated, the vehicle 20 transmits an alternative plan request to the terminal device 60. Note that when it is determined that the operation button GDa for presenting an alternative plan again has been operated, the vehicle 20 displays a user interface screen that is equivalent to the user interface screen of (b) of Fig. 8, in other words, a screen for inputting new delivery conditions and the like, and prompts the user to create an alternative plan.
(b) of Fig. 10 illustrates a user interface screen displayed when the alternative plan request has been received from the vehicle 20 in the terminal device 60. The screen is provided with an alternative plan input screen GEa, for example: a screen for specifying the delivery time that is a delivery condition; an input screen for inputting information relate to compensation desired by the use scheduled person, for example, compensation money; and a transmission instruction button GEb for transmission to the user. The use scheduled person inputs an alternative plan, and then operates the transmission instruction button GEb. At this point of time, the terminal device 60 transmits an alternative plan, which indicates information indicating new delivery time and information related to the compensation, to the vehicle 20 that is being used by the user.
(c) of Fig. 10 illustrates a user interface screen displayed when an alternative plan has been received in the vehicle 20. In a case where data related to the alternative plan, that is to say, new delivery conditions, has been received from the terminal device possessed by the use scheduled person, the integrated control unit of the vehicle 20 performs the control so as to display the new delivery conditions. Moreover, the integrated control unit generates a response based on the operation of the user, and then transmits the response to the terminal device possessed by the use scheduled person. The screen of the vehicle 20 is provided with an alternative plan display screen GDc, for example, a screen indicating the delivery time after the change, and the amount of compensation, an acceptance operation button GDd that is operated when an alternative plan is accepted, and a non-acceptance operation button GDe that is operated when an alternative plan is not accepted. The vehicle 20 generates response information corresponding to the operation of the acceptance operation button GDd or the non-acceptance operation button GDe, and then transmits the response information to the terminal device 60. Furthermore, the vehicle 20 transmits agreed delivery conditions to the vehicle management device 50.
(d) of Fig. 10 illustrates a user interface screen displayed when response information has been received from the vehicle 20 in the terminal device 60. A display screen GEc based on the response information is displayed on the screen. Note that (d) of Fig. 10 shows a case where the alternative plan has been accepted by the user.

In addition, in the operation of Fig. 10, in a case where non-acceptance operation has been performed when a request notification for agreed delivery conditions has been received, an alternative plan is proposed from the user to the use scheduled person. Moreover, in a case where non-acceptance operation has been performed, the user interface screen shown in (a) of Fig. 10 may be displayed so as to allow selection of a person who proposes an alternative plan between the user and the use scheduled person.

By performing such processing, in a case where the estimated time of arrival is delayed than the delivery time range, the delay in the delivery time is indicated by a delivery situation notification to the use scheduled person. Therefore, delaying the arrival at the delivery position on the basis of the delivery situation notification enables the use scheduled person to shorten the waiting time, and thus enables smooth delivery of the vehicle. Further, in a case where the estimated time of arrival is delayed than the delivery time, the use scheduled person is notified of information related to an available substitutable vehicle, which enables the use of a vehicle that is not scheduled to be used, and enables efficient use of the vehicle. Moreover, in a case where a vehicle scheduled to be used is used, negotiation for changing delivery conditions is performed, and consequently the vehicle can be delivered under delivery conditions agreed between the user and the use scheduled person, which enables smooth delivery of the vehicle from the user to the use scheduled person. Furthermore, the use scheduled person can also perform planning or the like with the initial schedule changed.

### <5-2. Operation performed in a case where the estimated time of arrival becomes earlier than a delivery time range>

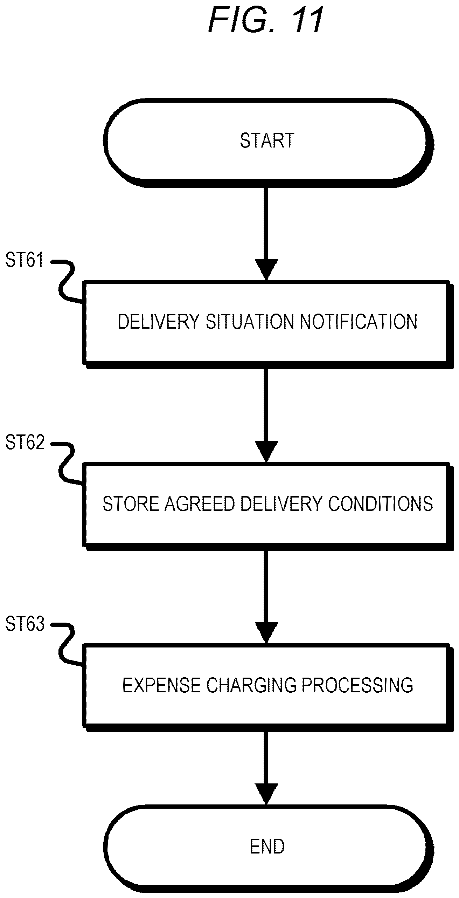

Fig. 11 is a flowchart partially illustrating the operation of the vehicle management device performed in a case where the estimated time of arrival is earlier than a delivery time range. Fig. 11 illustrates the operation of steps ST3 and ST5 in Fig. 4. Note that the operation of step ST61 in Fig. 11 corresponds to the operation of step ST3 in Fig. 4, and that the operation of steps ST62 and ST63 in Fig. 11 corresponds to the operation of step ST5 in Fig. 4.

In step ST61, the vehicle management device 50 performs a delivery situation notification. The vehicle management device 50 transmits, to the vehicle 20, a delivery situation notification that includes information related to additional expenses incurred by the time of arrival that becomes earlier.

In step ST62, the vehicle management device 50 stores agreed delivery conditions. In step ST61, in a case where it is determined by a response notification from the vehicle 20 that the user has performed acceptance operation of payment for additional expenses indicated by the delivery situation notification to the vehicle 20, the vehicle management device 50 stores the acceptance of the payment for additional expenses as agreed delivery conditions. Subsequently, the process proceeds to step ST63.

In step ST63, the vehicle management device 50 performs expense charging processing. On the basis of the agreed delivery conditions that are stored, the vehicle management device 50 adds the additional expenses incurred by the time of arrival that becomes earlier to the use fee of the vehicle 20, thereby charging the additional expenses.

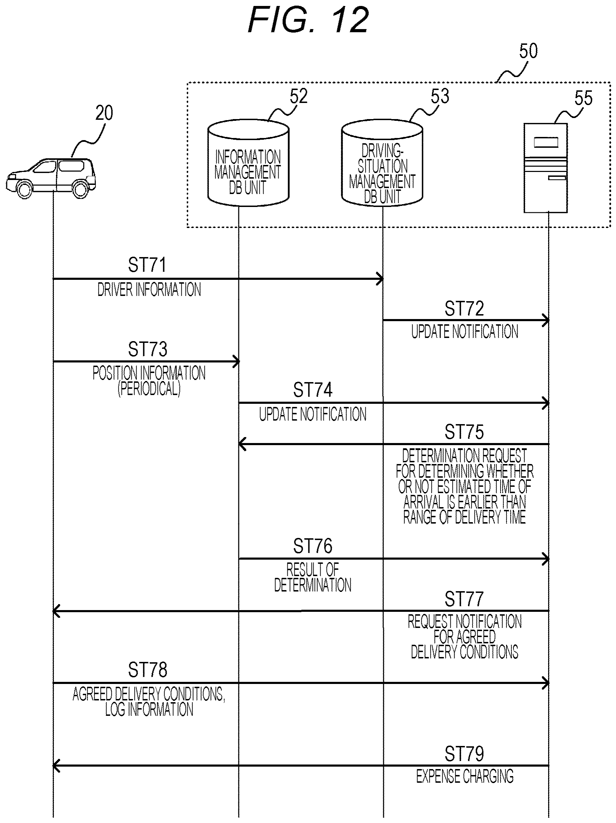

Fig. 12 is a sequence diagram illustrating the operation of the vehicle, and the operation of the vehicle management device. Note that Fig. 12 also illustrates the operation between the database unit and the vehicle management unit in the vehicle management device.

In step ST71, the vehicle 20 transmits driver information of a driver who starts using the vehicle 20 to the vehicle management device 50, and the vehicle management device 50 stores the driver information transmitted from the vehicle 20 in the driving-situation management database unit 53.

In step ST72, the driving-situation management database unit 53 of the vehicle management device 50 transmits an update notification of updating information related to a driving situation to the vehicle management unit 55, and the vehicle management unit 55 starts managing the use of the vehicle 20 by the user indicated by the driver information.

In step ST73, the vehicle 20 periodically transmits position information indicating a current position to the vehicle management device 50, and the vehicle management device 50 stores the position information transmitted from the vehicle 20 in the information management database unit 52 together with time information.

In step ST74, the information management database unit 52 transmits an information update notification to the vehicle management unit 55 every time position information is stored.

In step ST75, the vehicle management unit 55 transmits, to the information management database unit 52, a determination request for determining whether or not the estimated time of arrival is earlier than the delivery time range.

In step ST76, the information management database unit 52 transmits the result of determination to the vehicle management unit 55. According to the determination request from the vehicle management unit 55, the information management database unit 52 estimates the time of arrival at the delivery position on the basis of position information of the vehicle 20 and time information corresponding to the position information. In addition, on the basis of the result of estimating the time of arrival, the information management database unit 52 determines, for example, whether or not the time of arrival at the delivery position of the vehicle 20 is earlier than the delivery time range, and then transmits the result of determination to the vehicle management unit 55.

In step ST77, the vehicle management unit 55 transmits a request notification for agreed delivery conditions to the vehicle 20. The vehicle management unit 55 transmits, to the vehicle 20, a notification that includes information related to additional expenses including expenses or the like incurred by arriving at the delivery position early, for example, when the delivery position is a toll parking lot, a parking fee or the like incurred by arriving at the delivery position early.

In step ST78, the vehicle 20 transmits agreed delivery conditions and log information to the vehicle management unit 55. In a case where the payment for the expenses or the like indicated by the request notification for agreed delivery conditions is accepted, the vehicle 20 transmits the acceptance to the vehicle management unit 55 as agreed delivery conditions. Moreover, the vehicle 20 transmits information including the smoking detection result, the remaining amount of fuel, and the like to the vehicle management unit 55 as log information. Note that in a case where the payment for expenses or the like is not accepted, the user drives the vehicle 20 so as to arrive at the delivery position within the delivery time range.

In step ST79, the vehicle management unit 55 charges the user of the vehicle 20 for expenses. The vehicle management unit 55 charges the user (user) of the vehicle 20 for expenses, the payment of which has been accepted by the user, or the like by adding the expenses to the use fee of the vehicle 20.

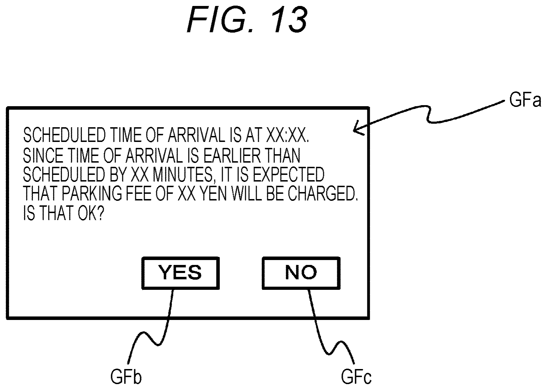

Fig. 13 illustrates a user interface screen displayed in a case where the estimated time of arrival is earlier than a delivery time range. This is a user interface screen displayed when a request notification for agreed delivery conditions has been received in the vehicle 20. The screen is provided with, for example: a display screen GFa that indicates the early arrival time, and expenses incurred by the early arrival; an acceptance operation button GFb use by the user to accept payment of the amount of compensation; and a non-acceptance operation button GFc used to refuse payment. When it is determined that the acceptance operation button GFb has been operated, the vehicle 20 transmits the acceptance of payment to the vehicle management device 50 as agreed delivery conditions. In addition, when it is determined that the non-acceptance operation button GFc has been operated, the vehicle 20 may display reference information as described later. Moreover, when it is determined that the non-acceptance operation button GFc has been operated, the vehicle 20 may perform negotiation for changing delivery conditions as described above so as to bring the delivery time forward.

Performing such processing enables expenses incurred by early arrival, for example, beforehand in a case where the estimated time of arrival is earlier than the delivery time range to be grasped, and thus enables smooth delivery of the vehicle. Furthermore, the user is also enabled to perform planning or the like in which the initial plan is changed in such a manner that the time of arrival becomes the delivery time.

### <5-3. Operation of negotiation for changing a delivery position>

Next, changing a delivery position will be described as a change of delivery conditions. The vehicle 20, the vehicle management device 50, and the terminal device 60 perform processing similar to that of Figs. 4 and 5, and change a delivery position by change negotiation.

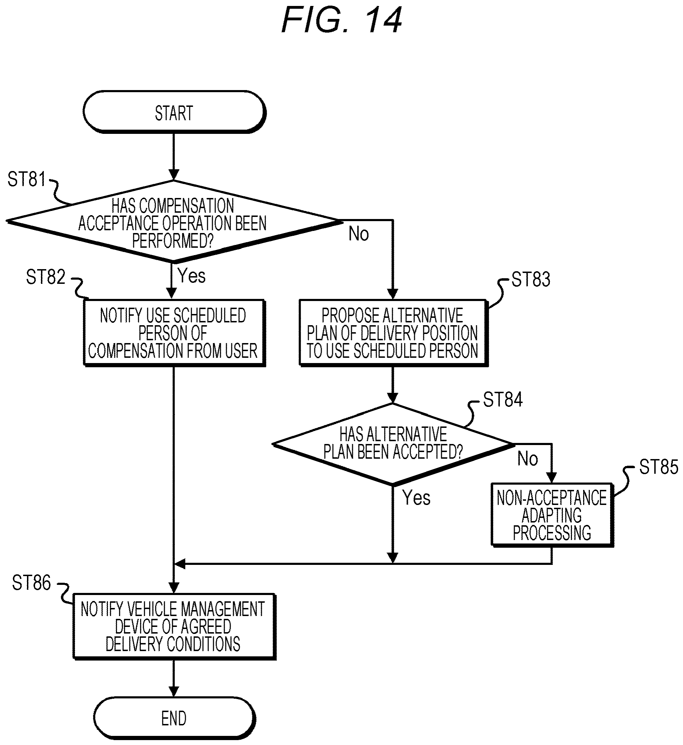

Fig. 14 is a flowchart illustrating response processing for a request notification for agreed delivery conditions. In Fig. 14, the vehicle 20 starts response processing in response to receiving a request notification for agreed delivery conditions from the vehicle management device 50. Note that the request notification for agreed delivery conditions includes, for example, information including: the amount of compensation prescribed beforehand according to a change of a delivery position by the contract or the like; contact information of the use scheduled person; and the like.

In step ST81, the vehicle 20 determines whether or not compensation acceptance operation has been performed. In a case where the vehicle 20 determines that acceptance operation in which the user accepts the compensation to the use scheduled person indicated by the request notification has been performed, the process proceeds to step ST82. In a case where the vehicle 20 determines that non-acceptance operation in which the compensation is not accepted has been performed, the process proceeds to step ST83.

In step ST82, the vehicle 20 notifies the use scheduled person of the compensation from the user. The vehicle 20 transmits, for example, a compensation money payment notification indicated from the vehicle management device 50 to the terminal device 60 of the use scheduled person whose contact information is indicated, and the process proceeds to step ST86.

In step ST83, the vehicle 20 proposes an alternative plan of the delivery position to the use scheduled person. The vehicle 20 displays an alternative plan input screen to prompt the user to set an alternative plan. In addition, the vehicle 20 transmits, to the terminal device 60, an alternative plan indicating, for example, the new delivery position, and the compensation corresponding to the change of the delivery position. Subsequently, the process proceeds to step ST84.

In step ST84, the vehicle 20 determines whether or not the alternative plan has been accepted. In the vehicle 20, in a case where a reply from the terminal device 60 to the alternative plan of step ST83 indicates acceptance of the alternative plan, the process proceeds to step ST86. In a case where the reply indicates non-acceptance of the alternative plan, the process proceeds to step ST85.

In step ST85, the vehicle 20 performs non-acceptance adapting processing. As the non-acceptance adapting processing of the vehicle 20, the user may propose a new alternative plan to the use scheduled person again, or the use scheduled person may propose a new alternative plan to the user. In the vehicle 20, in a case where an alternative plan proposed by one of the user and the use scheduled person has been accepted by the other, the process proceeds to step ST86. In addition, in a case where an alternative plan is not accepted even if the alternative plan has been proposed the predetermined number of times, the vehicle 20 determines that the delivery conditions prescribed in the contract or the like beforehand, for example, the compensation to the use scheduled person indicated by the request notification for agreed delivery conditions, have been accepted by the user. Subsequently, the process proceeds to step ST86. Note that the vehicle 20 transmits, to the terminal device 60, the user's acceptance of the alternative plan proposed by the use scheduled person, or the acceptance of the delivery conditions prescribed in the contract or the like beforehand.

In step ST86, the vehicle 20 notifies the vehicle management device of the agreed delivery conditions. The vehicle 20 transmits, for example, the acceptance of payment of the compensation money, and delivery conditions agreed between the user and the use scheduled person, the acceptance and the delivery conditions being indicated by the request notification for agreed delivery conditions, to the vehicle management device 50 as agreed delivery conditions.

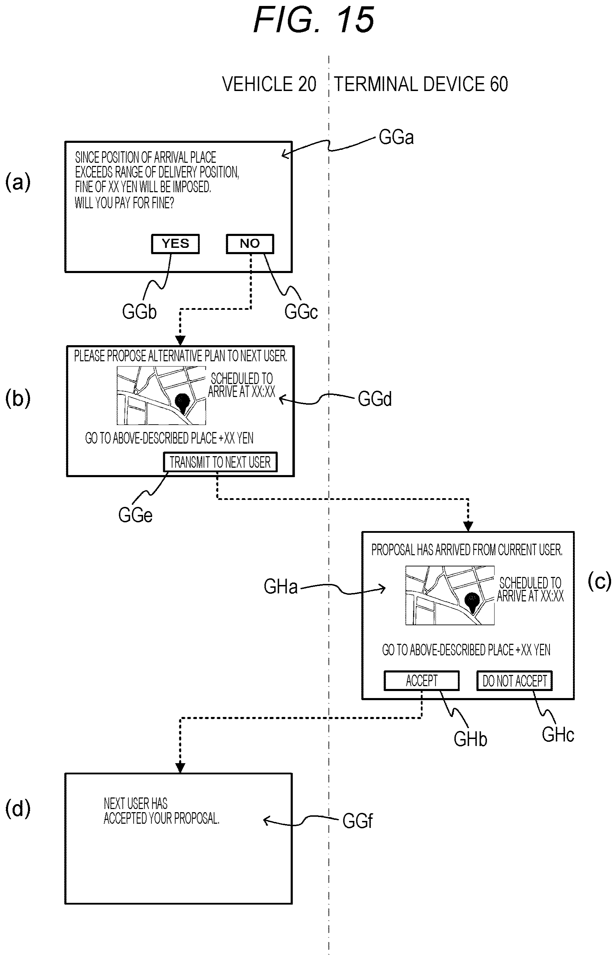

Fig. 15 illustrates a user interface screen of response processing for a request for agreed delivery conditions. Note that Fig. 15 shows: a user interface screen that is used by the user in the negotiation for changing delivery conditions, and that uses a display unit of the vehicle 20; and a user interface screen that uses a display unit of the terminal device 60 of the use scheduled person.
(a) of Fig. 15 is a user interface screen displayed when a request notification for agreed delivery conditions has been received in the vehicle 20. The screen is provided with, for example: a display screen GGa indicating a delivery position scheduled to be changed, and the amount of compensation incurred by the change of the place; an acceptance operation button GGb used by the user to accept payment of the amount of compensation; and a non-acceptance operation button GGc used to refuse the payment. When it is determined that the acceptance operation button GGb has been operated, the vehicle 20 transmits the acceptance of payment to the vehicle management device 50 as agreed delivery conditions. In addition, when it is determined that the non-acceptance operation button GGc has been operated, the vehicle 20 performs negotiation for changing delivery conditions.
(b) of Fig. 15 illustrates a user interface screen displayed when negotiation for changing delivery conditions is started in the vehicle 20. The screen is provided with an alternative plan input screen GGd, for example: a screen for specifying a delivery position; an input screen for inputting the amount of compensation; and a transmission instruction button GGe for transmission to the use scheduled person. The user inputs a new delivery position, and the amount of compensation, and then operates the transmission instruction button GGe. At this point of time, the vehicle 20 transmits information indicating the new delivery position, and information related to the alternative plan indicating the amount of compensation, to the terminal device 60 of the use scheduled person.
(c) of Fig. 15 illustrates a user interface screen displayed when an alternative plan has been received in the terminal device 60. The screen is provided with an alternative plan display screen GHa, for example: a screen that indicates the delivery position after the change, and the amount of compensation; an acceptance operation button GHb that is operated when an alternative plan is accepted; and a non-acceptance operation button GHc that is operated when the alternative plan is not accepted. The terminal device 60 transmits, to the vehicle 20, an alternative-plan response result corresponding to the operation of the acceptance operation button GHb or the non-acceptance operation button GHc.
(d) of Fig. 15 illustrates a user interface screen displayed when the alternative-plan response result has been received from the terminal device 60 in the vehicle 20. The alternative-plan response result GGf is displayed on the screen. Note that (d) of Fig. 15 shows a case where the alternative plan has been accepted by the use scheduled person.

Furthermore, in a case where the alternative-plan response result indicates non-acceptance, negotiation for changing the delivery position is performed as with the case where the delivery time is delayed.

By performing such processing, for example, in a case where the estimated time of arrival does not fall within the delivery time range, the delivery position can be changed to a place desired by the user and the use scheduled person.

### <5-4. Another operation of negotiation for changing delivery conditions>

In addition, the negotiation for changing delivery conditions is not limited to the case where the negotiation is started as the result of receiving the request notification for agreed delivery conditions from the vehicle management device 50. The negotiation for changing may be started, for example, in a case where the user of the vehicle 20 desires to change delivery conditions. Note that in a case where information indicating contact information of the use scheduled person is not obtained when the user starts negotiation for changing delivery conditions, the vehicle 20 obtains information including the contact information of the use scheduled person, or the like from the vehicle management device 50.

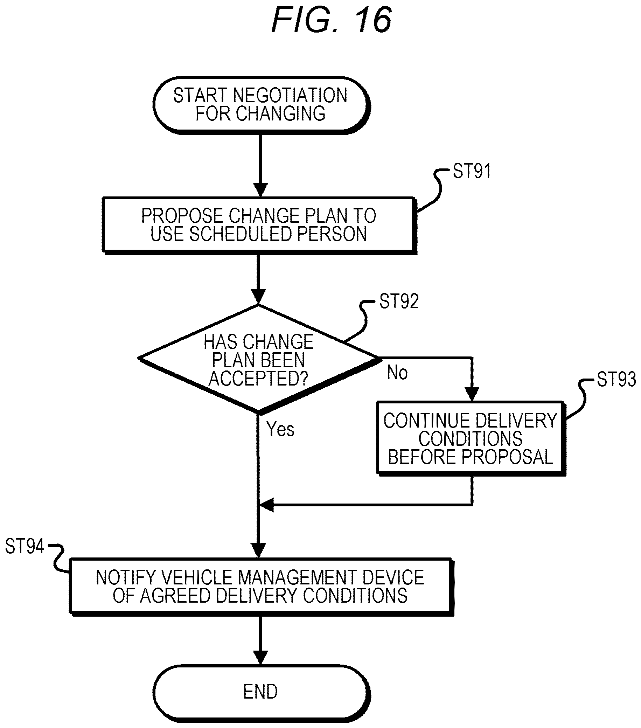

Fig. 16 is a flowchart illustrating the operation performed in a case where a user desires to change delivery conditions. In step ST91, the vehicle 20 proposes a change plan of delivery conditions to the use scheduled person. For example, in a case where the user wants to smoke inside the vehicle or wants to omit fueling work or the like, the vehicle 20 transmits, to the terminal device 60, a change plan that indicates delivery conditions to be changed, and compensation for the change. Subsequently, the process proceeds to step ST92.

In step ST92, the vehicle 20 determines whether or not the change plan has been accepted. In the vehicle 20, in a case where a reply from the terminal device 60 to the change plan made in step ST91 indicates acceptance of the change plan, the process proceeds to step ST94. In a case where the reply indicates non-acceptance of the change plan, the process proceeds to step ST93.

In step ST93, the vehicle 20 continues the delivery conditions before the proposal. The vehicle 20 prompts the user to use the vehicle 20 under the delivery conditions before the proposal, and the process proceeds to step ST94.

In step ST94, the vehicle 20 notifies the vehicle management device of the agreed delivery conditions. The vehicle 20 transmits information related to the change of the delivery conditions agreed between the user and the use scheduled person, and related to the compensation, to the vehicle management device 50 as agreed delivery conditions.

In this manner, by allowing negotiation for changing not only the delivery time and the delivery position but also other situations as delivery conditions, flexibility in vehicle delivery conditions between the user and the use scheduled person can be increased.

### <6. Another operation of vehicle management system>

In addition, in the above-described operation, in a case where the estimated time of arrival is delayed than the delivery time range, negotiation of the delivery time is performed, and in a case where the vehicle position at the delivery time is away from the delivery position, negotiation of the delivery position is performed. However, the vehicle management system 10 may combine the above-described operations. For example, in a case where the estimated time of arrival is delayed than the delivery time range, the vehicle management system 10 may propose, as an alternative plan, delivery conditions including information related to changing the delivery position, and the delivery time, at which the use scheduled person rides the vehicle. Moreover, in a case where the vehicle position at the delivery time is away from the delivery position, not only the new delivery position but also the new delivery time may be proposed as an alternative plan. In this manner, performing the change negotiation by combining the delivery time with the delivery position enables the delivery time and the delivery position according to the behavior of the user and the behavior of the use scheduled person to be optimized. For example, in a case where the use scheduled person is moving along a route toward a scheduled delivery position, the vehicle 20 can also be delivered from the user to the use scheduled person before the vehicle moves to the delivery position, or before the time exceeds the delivery time range.

In addition, in a case where the estimated time of arrival is earlier than or later than the delivery time range, the vehicle management device 50 may transmit, from the vehicle management device 50 to the vehicle 20 and the terminal device 60, information that can be used at the delivery position or along the route up to the delivery position. Information including service information of shops, sightseeing spots, and the like is also stored in, for example, the information providing device 90 shown in Fig. 1. Moreover, the vehicle management device 50 obtains, from the information providing device 90, information related to shops located in proximity to the delivery position, information that can be used to cause the estimated time of arrival to fall within a predetermined time range, for example, side trip information indicating sightseeing spots located in proximity to the traveling route of the vehicle, or the like. Furthermore, the vehicle management device 50 transmits the obtained information with the obtained information included in, for example, a delivery situation notification to the use scheduled person, or a request notification for agreed delivery conditions to the user. Note that the information providing device 90 is provided for each provided information, and that the vehicle management device 50 may obtain information from the information providing device 90 that stores required information when the information is required.

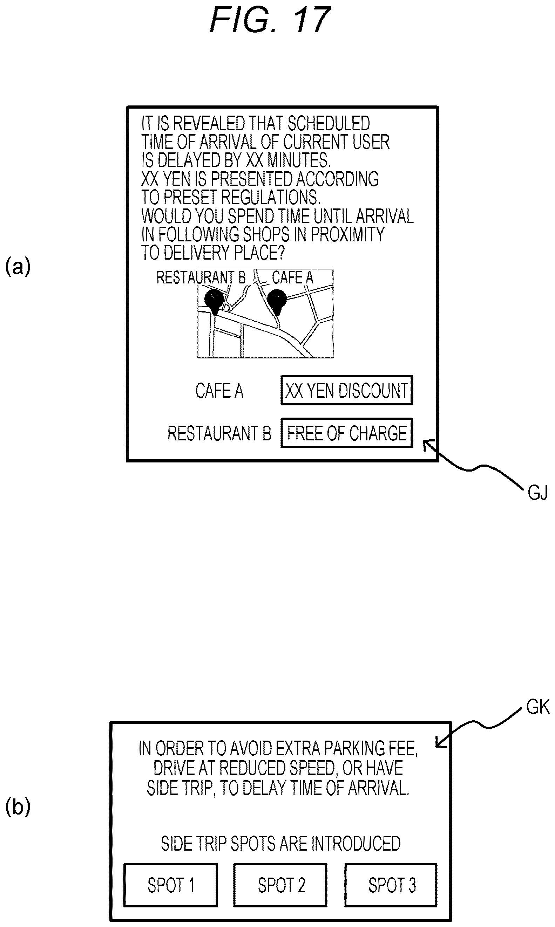

Fig. 17 illustrates a user interface screen displayed in a case where obtained information is presented in a vehicle or an information terminal.
(a) of Fig. 17 shows a case where, for example, service information of shops is included the delivery situation notification to the use scheduled person. The terminal device 60 presents information, which is included in the delivery situation notification from the vehicle management device 50, to the use scheduled person by a display screen GJ. For example, the display screen GJ displays the occurrence of a delay in delivery of the vehicle, shops that are located in proximity to the delivery position, and in which services are provided, positions of the shops, and service contents provided in the shops.

In this manner, including the service information of the shops in the delivery situation notification enables the use scheduled person to get services at a desired shop. Consequently, the use scheduled person can make effective use of the waiting time. In addition, the vehicle manager is also enabled to obtain a counter value for the provision of the service information from each shop, and accordingly the shops can increase customers. Moreover, if the user bears expenses incurred by services gotten by the use scheduled person, negotiation for delivery can be smoothly performed.
(b) of Fig. 17 shows a case where side trip spot information is included in the delivery situation notification to the user in a case where the time of arrival is early.

The vehicle 20 presents the information, which is indicated by the delivery situation notification from the vehicle management device 50, to the user by using a display screen GK. For example, when it is determined that the non-acceptance operation button shown in Fig. 13 has been operated, the vehicle 20 presents information including an instruction to delay the arrival, side trip spots, and the like to the user as reference information.

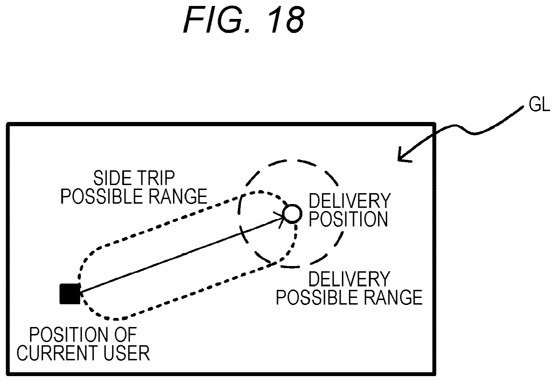

In addition, Fig. 18 illustrates another user interface screen displayed in a case where obtained information is presented in a vehicle or an information terminal. The user interface screen displays a display screen GL in which obtained information is shown in a two-dimensional plane. On a map of the display screen GL, for example, a position of the user, a delivery position, a delivery possible range, a side trip possible range based on the early arrival time, and the like, are displayed. Performing such displaying enables delivery conditions and the like to be visually grasped, and thus enabling the delivery conditions to be changed to the delivery time and the delivery position as desired by the user and the use scheduled person.

Moreover, in the above-described operation, there has been presented a case where the negotiation for changing delivery conditions is performed between the user and the use scheduled person without the intervention of the vehicle management device. However, the change negotiation may be performed with the intervention of the vehicle management device. For example, in a case where the change negotiation is performed with the intervention of the vehicle management device, information of the use scheduled person can be concealed. In a case where the change negotiation is performed without the intervention of the vehicle management device, the load of the vehicle management device can be prevented from increasing.

Further, in the vehicle management system 10, if the operation shown in Fig. 4 is performed earlier than the delivery time range by the predetermined time period, the user is capable of coping with the early arrival on the basis of the delivery situation notification of which is provided from the vehicle management device as described above. Furthermore, in the vehicle management system 10, if the operation shown in Fig. 4 is performed earlier than the delivery time by the predetermined time period, the use scheduled person can be notified of the delivery situation in the proper timing. For example, it is possible to prevent the use scheduled person from being notified of the delivery situation immediately before the delivery time, or in the timing that is too earlier than the delivery time.

In addition, a series of processing described in the description can be executed by hardware, software, or a composite configuration of both. In a case where processing is executed by software, a program that records a processing sequence is installed in a memory built into dedicated hardware in the computer, and is caused to be executed. Alternatively, by installing a program in a general purpose computer that is capable of executing various kinds of processing, the program can be executed.

For example, the program can be recorded in a hard disk, a Solid State Drive (SSD), or a Read Only Memory (ROM) as a recording medium beforehand. Alternatively, the program can be temporarily or permanently stored (recorded) in a removable recording medium including a flexible disk, a Compact Disc Read Only Memory (CD-ROM), a Magneto optical (MO) disk, a Digital Versatile Disc (DVD), a Blu-Ray Disc (BD)(registered trademark), a magnetic disk, a semiconductor memory card, and the like. Such a removable recording medium can be provided as, what is called, package software.

Moreover, other than the method in which the program is installed from the removable recording medium to the computer, the program may be wirelessly or wiredly transmitted from a download site to the computer through a network such as a Local Area Network (LAN) and the Internet. The computer is capable of receiving the program transmitted in such a manner, and is capable of installing the program in a recording media such as a built-in hard disk.

It should be noted that the effects described in the present description are to be construed as merely illustrative, and are not limitative, and that an undescribed additional effect may be produced. Furthermore, the present technology should not be construed as limitative to the embodiments of the technology described above. In the embodiments of the present technology, the present technology is disclosed in a mode of presentation, and accordingly it is obvious that a person skilled in the art can correct or substitute the embodiments within the scope that does not deviate from the gist of the present technology. In other words, in order to determine the gist of the present technology, the claims should be taken into consideration.

Moreover, the vehicle management device according to the present technology can also have configurations such as that described below
(1) A vehicle management device including:
   a communication unit that communicates with a terminal device used by a user of a vehicle, and a terminal device possessed by a use scheduled person of the vehicle; and
   a vehicle management unit that, in a case where estimated time of arrival at a delivery position at which the vehicle is delivered from the user to the use scheduled person, the estimated time of arrival having been estimated on the basis of position information of the vehicle, does not fall within a preset predetermined time range that is set with reference to delivery time of the vehicle and includes the delivery time, transmits a delivery situation to the terminal device of the use scheduled person.
(2) The vehicle management device set forth in (1), in which in a case where the estimated time of arrival is later than the predetermined time range, the vehicle management unit transmits a delivery condition to the terminal device of the user.
(3) The vehicle management device set forth in (2), in which the vehicle management unit includes, in the delivery conditions, information used to perform negotiation for changing delivery conditions between the terminal device of the user and the terminal device of the use scheduled person.
(4) The vehicle management device set forth in (2) or (3), in which in a case where a response to the delivery situation from the use scheduled person does not indicate use of a substitutable vehicle for the vehicle, the vehicle management unit transmits the delivery condition to the terminal device of the user.
(5) The vehicle management device set forth in (4), in which in a case where the response from the use scheduled person indicates the use of the substitutable vehicle, the vehicle management unit transmits information related to the substitutable vehicle to the use scheduled person.
(6) The vehicle management device set forth in any of (2) to (5), in which in a case where the estimated time of arrival is later than the predetermined time range, the vehicle management unit includes, in the delivery conditions, information related to amount of compensation for a delay in delivery.
(7) The vehicle management device set forth in any of (2) to (6), in which in a case where the estimated time of arrival is earlier than the predetermined time range, the vehicle management unit includes, in the delivery situation, information related to expenses incurred by early arrival.
(8) The vehicle management device set forth in any of (3) to (7), in which the vehicle management unit stores the delivery conditions responded to a request for the delivery conditions.
(9) The vehicle management device set forth in any of (1) to (8), in which in a case where the estimated time of arrival is later than the predetermined time range, the vehicle management unit includes, in the delivery situation, information related to shops located in proximity to the delivery place.
(10) The vehicle management device set forth in any of (1) to (9), in which in a case where the estimated time of arrival is earlier than the predetermined time range, the vehicle management unit includes, in a notification of the delivery information, information that can be used to cause the estimated time of arrival to fall within the predetermined time range.

Furthermore, the terminal device according to the present technology can also have configurations such as that described below.
(1) A terminal device including:
   a position information obtaining unit that obtains position information;
   a communication unit that communicates with a vehicle management device for managing data related to a predetermined vehicle; and
   a control unit that controls the position information obtaining unit and the communication unit,
   in which in response to transmitting, to the vehicle management device, position information obtained by the position information obtaining unit, or estimated time of arrival at a delivery place in which the vehicle is delivered from the user to the use scheduled person, the estimated time of arrival having been estimated on the basis of the position information, the control unit performs negotiation with the use scheduled person for delivery conditions of the vehicle.
(2) The terminal device set forth in (1), in which the control unit performs negotiation with the use scheduled person for delivery conditions of the vehicle in response to a request for delivery conditions received from the vehicle management device.
(3) The terminal device set forth in (1) or (2), further including an input unit that accepts operation of the user who is using the vehicle,
   in which in a case where non-acceptance operation for payment of amount of compensation indicated by the request for delivery conditions is performed by the input unit, the control unit transmits the delivery conditions created according to the operation of the user to the terminal device of the use scheduled person.
(4) The terminal device set forth in (3), in which the delivery conditions created according to the operation of the user includes information related to the amount of compensation, or information related to new delivery time or a new delivery place.
(5) The terminal device set forth in (3) or (4), in which in a case where the use scheduled person does not accept the transmitted delivery conditions, the control unit creates new delivery conditions, or requests the use scheduled person for delivery conditions.
(6) The terminal device set forth in any of (3) to (5), in which on the basis of the operation of the user for the delivery conditions, the operation having been transmitted from the use scheduled person and having been displayed in a display unit, the control unit generates a response, and transmits the response to the use scheduled person.
(7) The terminal device set forth in any of (2) to (6), in which the control unit transmits, to the vehicle management device, delivery conditions after change accepted by the user and the use scheduled person.

### INDUSTRIAL APPLICABILITY

In the vehicle management device, the terminal device, the vehicle management method, and the program according to the present technology, communication is performed between the terminal device used by the user of the vehicle and the terminal device possessed by the use scheduled person who is scheduled to use the vehicle. In a case where estimated time of arrival at a delivery position at which the vehicle is delivered from the user to the use scheduled person, the estimated time of arrival having been estimated on the basis of position information of the vehicle, does not fall within a preset predetermined time range that is set with reference to delivery time of the vehicle and includes the delivery time, the vehicle management device transmits a delivery situation to the terminal device of the use scheduled person. Therefore, the use scheduled person is enabled to grasp a use situation of the vehicle used by the user, and consequently the vehicle can be smoothly delivered from the user to the use scheduled person. Accordingly, the present technology is suitable for a car sharing system, or the like, in which vehicles are shared.

### REFERENCE SIGNS LIST

- 10: Vehicle management system
- 20: Vehicle
- 21: Drive-system control unit
- 22: Body-system control unit
- 23: Battery control unit
- 24: Vehicle outside information detection part
- 25: Wireless communication unit
- 26: Position information obtaining unit
- 27: Input unit
- 28: Audio output unit
- 29: Display unit
- 31: Integrated control unit
- 35: Communication network
- 50: Vehicle management device
- 51: Wireless communication unit
- 52: Information management database unit
- 53: Driving-situation management database unit
- 55: Vehicle management unit
- 56: Input unit
- 57: Audio output unit
- 58: Display unit
- 59: Network
- 60: Terminal device
- 90: Information providing device
- 211: Vehicle state detection unit
- 231: Secondary battery

## Claims

1. A vehicle management device comprising:
a communication unit that communicates with a terminal device used by a user of a vehicle, and a terminal device possessed by a use scheduled person of the vehicle; and
a vehicle management unit that, in a case where estimated time of arrival at a delivery position at which the vehicle is delivered from the user to the use scheduled person, the estimated time of arrival having been estimated on the basis of position information of the vehicle, does not fall within a preset predetermined time range that is set with reference to delivery time of the vehicle and includes the delivery time, transmits a delivery situation to the terminal device of the use scheduled person.

2. The vehicle management device according to claim 1, wherein
in a case where the estimated time of arrival is later than the predetermined time range, the vehicle management unit transmits a delivery condition to the terminal device of the user.

3. The vehicle management device according to claim 2, wherein
the vehicle management unit includes, in the delivery conditions, information used to perform negotiation for changing delivery conditions between the terminal device of the user and the terminal device of the use scheduled person.

4. The vehicle management device according to claim 2, wherein
in a case where a response to the delivery situation from the use scheduled person does not indicate use of a substitutable vehicle for the vehicle, the vehicle management unit transmits the delivery condition to the terminal device of the user.

5. The vehicle management device according to claim 4, wherein
in a case where the response from the use scheduled person indicates the use of the substitutable vehicle, the vehicle management unit transmits information related to the substitutable vehicle to the use scheduled person.

6. The vehicle management device according to claim 2, wherein
in a case where the estimated time of arrival is later than the predetermined time range, the vehicle management unit includes, in the delivery conditions, information related to amount of compensation for a delay in delivery.

7. The vehicle management device according to claim 1, wherein
in a case where the estimated time of arrival is earlier than the predetermined time range, the vehicle management unit includes, in the delivery situation, information related to expenses incurred by early arrival.

8. The vehicle management device according to claim 2, wherein
the vehicle management unit stores the delivery conditions responded to a request for the delivery conditions.

9. The vehicle management device according to claim 1, wherein
in a case where the estimated time of arrival is later than the predetermined time range, the vehicle management unit includes, in the delivery situation, information related to shops located in proximity to the delivery place.

10. The vehicle management device according to claim 1, wherein
in a case where the estimated time of arrival is earlier than the predetermined time range, the vehicle management unit includes, in a notification of the delivery situation, information that can be used to cause the estimated time of arrival to fall within the predetermined time range.

11. A terminal device comprising:
a position information obtaining unit that obtains position information;
a communication unit that communicates with a vehicle management device for managing data related to a predetermined vehicle; and
a control unit that controls the position information obtaining unit and the communication unit,
wherein in response to transmitting, to the vehicle management device, position information obtained by the position information obtaining unit, or estimated time of arrival at a delivery place in which the vehicle is delivered from the user to the use scheduled person, the estimated time of arrival having been estimated on the basis of the position information, the control unit performs negotiation with the use scheduled person for delivery conditions of the vehicle.

12. The terminal device according to claim 11, wherein
the control unit performs negotiation with the use scheduled person for delivery conditions of the vehicle in response to a request for delivery conditions received from the vehicle management device.

13. The terminal device according to claim 11,
further comprising an input unit that accepts operation of the user who is using the vehicle,
wherein in a case where non-acceptance operation for payment of amount of compensation indicated by the request for delivery conditions is performed by the input unit, the control unit transmits the delivery conditions created according to the operation of the user to the terminal device of the use scheduled person.

14. The terminal device according to claim 13, wherein
the delivery conditions created according to the operation of the user includes information related to the amount of compensation, or information related to new delivery time or a new delivery place.

15. The terminal device according to claim 13, wherein
in a case where the use scheduled person does not accept the transmitted delivery conditions, the control unit creates new delivery conditions, or requests the use scheduled person for delivery conditions.

16. The terminal device according to claim 13, wherein
on the basis of the operation of the user for the delivery conditions, the operation having been transmitted from the use scheduled person and having been displayed in a display unit, the control unit generates a response, and transmits the response to the use scheduled person.

17. The terminal device according to claim 12, wherein
the control unit transmits, to the vehicle management device, delivery conditions after change accepted by the user and the use scheduled person.

18. A vehicle management method comprising:
communicating with a terminal device used by a user of a vehicle, and a terminal device possessed by a use scheduled person of the vehicle, by using a communication unit; and
in a case where estimated time of arrival at a delivery place in which the vehicle is delivered from the user to the use scheduled person, the estimated time of arrival having been estimated on the basis of position information of the vehicle, does not fall within a predetermined time range that is set with reference to delivery time of the vehicle and includes the delivery time, transmitting a delivery situation to the terminal device of the user or the use scheduled person by a vehicle management unit.

19. A program that causes a computer to execute management of a vehicle, the program causing the computer to realize:
a determination function of determining whether or not estimated time of arrival at a delivery place in which the vehicle is delivered from the user to the use scheduled person of the vehicle, the estimated time of arrival having been estimated on the basis of information obtained by a terminal device used by the user of the vehicle through a communication unit, falls within a predetermined time range that is set with reference to delivery time of the vehicle and includes the delivery time; and
a notification function of, in a case where it is determined, by the determination function, that the estimated time of arrival does not fall within the predetermined time range, notifying a terminal device used by the user, or a terminal device possessed by the use scheduled person, of a delivery situation.
